# EUROPEAN PATENT SPECIFICATION

(11) **EP 4 433 306 B1**
(45) Date of publication and mention of the grant of the patent: **24.12.2025**
(21) Application number: 22817177.3
(22) Date of filing: 09.11.2022
(51) Int. Cl.: B33Y 10/00, B22F 10/18, B28B 1/00, B29C 64/118, B33Y 70/10, C04B 35/053, C04B 35/057, C04B 35/111, C04B 35/14, C04B 35/46, C04B 35/486, C04B 35/505, C04B 35/565, C04B 35/58, C04B 35/581, C04B 35/583, C04B 35/584, C04B 35/634, B33Y 40/20

(54) **CERAMIC FEEDSTOCK FOR FUSION BARRIERS AND SUPPORT STRUCTURES USED IN ADDITIVE MANUFACTURING**
KERAMISCHES AUSGANGSMATERIAL FÜR SCHMELZBARRIEREN UND IN DER ADDITIVEN HERSTELLUNG VERWENDETE STÜTZSTRUKTUREN
CHARGE D'ALIMENTATION EN CÉRAMIQUE POUR BARRIÈRES DE FUSION ET STRUCTURES DE SUPPORT UTILISÉES DANS UNE FABRICATION ADDITIVE

(30) Priority: 15.11.2021 EP 21208226
(43) Date of publication of application: 25.09.2024
(73) Proprietor: Stratasys, Inc., Minnetonka, MN 55343 (US)
(72) Inventor: HERMANT, Marie-Claire, 67056 Ludwigshafen (DE); STAUDT, Thorsten Martin, 67056 Ludwigshafen (DE); MADKOUR, Sherif Aly Hassan Aly, 67056 Ludwigshafen (DE); REGENAUER, Markus, 67056 Ludwigshafen (DE); SCHWENDY, Sascha Tim, 67056 Ludwigshafen (DE); PITTS, James Daniel, 69115 Heidelberg (DE); LUDL, Benjamin, 69115 Heidelberg (DE); AHNSORGE, Tim, 69115 Heidelberg (DE); ROEDLMEIER, Tobias, 69115 Heidelberg (DE); HIZAL, Firat, 69115 Heidelberg (DE); GEERTS, Rien Hendrik, 7821 AT Emmen (NL)
(74) Representative: Davepon, Björn
(86) International application number: PCT/EP2022/081357
(87) International publication number: WO 2023/083908

(56) References cited:
- EP-A1- 3 750 860
- WO-A1-2019/170463
- US-A- 5 188 782
- US-A- 5 693 825
- US-A1- 2013 203 921
- US-A1- 2021 163 364
- US-A1- 2021 214 494
- US-B2- 10 501 869
- GULGUNJE: "Low-density and high-modulus carbon fibers from polyacrylonitrile with honeycomb structure", 20 August 2015 (2015-08-20), XP055909801, Retrieved from the Internet <URL:https://www.sciencedirect.com/science/article/pii/S0008622315302001?via%3Dihub> [retrieved on 20220406]

## Description

The invention relates to a ceramic feedstock comprising the components a), b) and optionally c), wherein component a) is at least one ceramic material, component b) is at least one binder (B) and optional component c) is at least one additive (A). The ceramic feedstock is preferably provided in form of a filament to be employed in three-dimensional (3D) printing techniques, particularly in a FFF printing process. The inventive ceramic feedstock can, therefore, be successfully employed for the 3D printing of support structures and/or separation layers. Further, the invention also relates to three-dimensional objects as such, in particular three-dimensional green bodies, three-dimensional brown bodies or three-dimensional sintered bodies as well as to a process for the preparation thereof.

One of the most commonly used 3D printing technologies or additive manufacturing technology is the fused deposition modeling (FDM), also known as fused filament fabrication process (FFF). For the production of three-dimensional objects, usually filaments of thermoplastic materials, provided on a spool, are deposited layer-by-layer through a heated nozzle on a base. Therefore, the thermoplastic material is heated to a temperature past its melting and/or glass transition temperature. The thermoplastic material and the temperature gradient are selected in order enable its solidification essentially immediately upon contacting the base or a preceding layer of thermoplastic material extruded.

In order to form each layer, drive motors are provided to move the base and/or the extrusion nozzle (dispending head) relative to each other in a predetermined pattern along the x-, y- and z-axis. Fused deposition modeling (FDM) was first described in US 5,121,329.

Typical materials for the production of three-dimensional objects are thermoplastic materials.

The production of three-dimensional metallic or ceramic objects by fused filament fabrication is only possible if the metal or ceramic material has a low melting point so that it can be heated and melted by the nozzle. If the metal or ceramic material has a high melting point, it is necessary to provide the metal or ceramic material in a binder composition to the extrusion nozzle. The binder composition usually comprises a thermoplastic material. When depositing the mixture of a metal or ceramic material in a binder on a base, the formed three-dimensional object is a so called "green body", which comprises the metal or ceramic material in a binder. To receive the desired metallic or ceramic object, the binder has to be removed to form a so called "brown body" and finally the object has to be sintered. WO 2019/025472 discloses such 3D FFF printing techniques by employing a 3D printer containing at least one nozzle and at least one mixing element.

WO 2016/012486 describes the use of mixtures comprising an inorganic powder, such as a metal, a metal alloy or a ceramic material, and a binder comprising a polyoxymethylene, a polyolefin and other polymers in a fused filament fabrication process. The mixtures are melted in the nozzle of a 3D printer and are deposited layer by layer to form a three-dimensional object. High amounts of inorganic powder in the mixtures have the disadvantage that the resulting filaments generally are very brittle and thus, are more difficult to handle.

WO 2017/009190 describes filaments comprising a core material and a shell material, with the core material comprising an inorganic powder and a binder, and the shell material comprising a thermoplastic polymer, an inorganic powder and optionally additives. The filaments described in WO 2017/009190 are more stable and can be rolled on a spool, which renders them easier to store and process than those disclosed in WO 2016/012486. The filaments are further used in fused deposition modeling to form three-dimensional objects.

WO 2018/108639 discloses the use of filaments similar to those described in WO 2017/009190 as a support material in a fused filament fabrication process. The filaments comprise a core material which contains a ceramic material precursor and a binder and further comprises a shell material which contains a thermoplastic polymer, among others.

US 10,501,869 B2 discloses a filament comprising a core material (CM) coated with a layer of shell material (SM), wherein the core material (CM) comprises the components a) to c): a) 30 to 80% by volume, based on the total volume of the core material (CM) of at least one inorganic powder (IP), b) 20 to 70% by volume, based on the total volume of the core material (CM) of at least one binder (B) comprising component b1), b1) at least one polymer (P) and c) 0 to 20% by volume, based on the total volume of the core material (CM) of at least one additive (A), wherein the at least one polymer (P) is a polyoxymethylene (POM) homopolymer, a polyoxymethylene (POM) copolymer or polyoxymethylene (POM) terpolymer and wherein at least some of the OH-end groups of the polyoxymethylene (POM) homopolymer are capped, and the shell material (SM) comprises the components d) to f): d) 75 to 100% by volume, based on the total volume of the shell material (SM) of at least one thermoplastic polymer (TP), e) 0 to 20% by volume, based on the total volume of the shell material (SM) of the at least one inorganic powder (IP), and f) 0 to 25% by volume, based on the total weight of the shell material (SM) of the at least one additive (A).

WO 2019/170463 A1 discloses a filament comprising a core material (CM) coated with a layer of shell material (SM), wherein the core material (CM) comprises a) at least one fibrous filler (FF), b) at least one thermoplastic polymer (TP1), and c) optionally at least one additive (A), and the shell material (SM) comprises d) at least one thermoplastic polymer (TP2), e) optionally at least one fibrous filler (FF), and f) optionally at least one additive (A).

US 2021/0214494 A1 discloses a method for the production of a colored polyoxymethylene.

US 2013/0203921 A1 relates to thermoplastic compositions which comprise mixtures of polyoxymethylene homo- or copolymers, production of these, use of these for producing metallic or ceramic moldings, and the resultant moldings.

US 5,693,825 A discloses a process for the preparation of aziridines over heterogeneous catalysts, wherein the heterogeneous catalysts used are presintered moldings maintained as a fluidized bed.

The filaments disclosed in the prior art, and in particular those comprising inorganic materials such as metals, metal alloys or ceramics, have the disadvantage that the respective green bodies and the brown bodies formed from said filaments via fused deposition modeling tend to exhibit a rather low stability. In addition, green bodies and brown bodies often exhibit breakpoints and the brown bodies are especially prone to damage, since the removal of the binder can easily result in the collapse of the brown bodies.

US-B 10 800 108, WO 2019/226815 or US-B 9 833 839 also relate to 3D printing techniques, in particular to FFF processes employing metal-based filaments. The respective methods can also be employed for printing 3D support structures. It is also possible to employ different printing materials based on powdered material. However, none of the aforementioned three prior art documents discloses the use of a specific binder material employed in connection with the optional powdered material.

As described in the aforementioned prior art, ceramic feedstocks are known to the skilled person in art and are widely used for the manufacturing of ceramic filaments for 3D printing in the FFF process. Said ceramic filaments are typically highly filled with ceramic materials and require the application of multiple binder systems.

However, in the 3D printing of metal parts, ceramic filaments are typically used for the printing of full support structures or separation layers. Metal-filled filaments are usually used for the printing of a desired metal object. Ceramic-filled filaments may, therefore, function as support structures or separation layers. Both filaments together may be used to form a hybrid structure that undergoes a debinding and a subsequent sintering step resulting in the desired metal object and support material that is removed from the desired metal object.

In general, ceramic filaments are used, in the aforementioned process, for the printing one or multiple layers of ceramic filaments underneath, on or between layered metal structures to support the desired metal object helping to stabilize the desired metal object during the debinding and sintering process. If the ceramic filament is used as a separation layer, it is usually printed in one or multiple layers between the desired metal object and a metal support structure helping to separate any printed metal support structure from the desired metal object after debinding and sintering. If the ceramic filament is used for the printing of full support structures, all cavities are typically filled with layers of the ceramic filament.

Debinding is usually conducted thermally, chemically, catalytically or via solvent. Sintering is performed under high temperatures that do not exceed the melting temperature of the metal components but that also do not exceed the sinter temperature of the ceramic components.

One big challenge is to design a ceramic filament that has the same or at least a very similar shrinking behavior as the metal-filled filament during the sintering process in order to maintain a dimensional stability of the 3D-printed metal object and to avoid any breakage, warping or torsion.

A further challenge is to cleanly and easily remove any support structure from the desired metal object, meaning free of any polymeric, ceramic or metallic residues.

Although a more or less clean thermal decomposition of the binder material might be possible in theory, reality shows a strong dependency from the oxygen content in the debinding atmosphere. A major drawback is that carbon-containing residues might be formed during thermal debinding since the oxygen content is not high enough, especially in the center of thick object parts leading to carbon-rich deposits/residue at the desired metal object as a consequence. Further, the desired metal object may exhibit cracks during the thermal debinding process since the binder is removed simultaneously and quickly from the whole object - even for thick objects - leading to a lack of stabilization during the debinding process.

With respect to solvent debinding the thickness of the final metal object is also limited since the solvent cannot reach all parts of the polymeric binder matrix homogeneously leading to a residual binder system after debinding.

The object underlying the present invention is to solve at least some of the problems of the prior art as described above and to provide a new ceramic feedstock suitable for the manufacturing of a ceramic filament and the use thereof in a 3D-printing process.

This object is achieved by a ceramic feedstock as defined in claim 1.

One advantage of the inventive ceramic feedstock is that at least some, preferably all of the above mentioned problems posed by the prior art are solved. For example, new warpage reduced ceramic feedstocks, especially those being based on polyoxymethylene (POM) as part of the binder material, are provided. The ceramic feedstock according to the present invention is suitable for the manufacturing of a ceramic filament and the use thereof in the 3D-printing processes including, for example, the printing of metal-containing objects.

Another advantage can be seen in the printing of metal-containing objects, wherein the inventive ceramic feedstock is employed for printing support or separation layer enabling a commercially feasible and clean removal of any support material after the debinding and sintering, especially in connection with ceramic feedstocks based on polyoxymethylene (POM). In the past POM based filaments with a loading degree of less than 60%vol were hardly printable due to warpage of the carrier/binder material. However, with the inventive ceramic feedstock even filaments with very low inorganic filler or organic additives are easily processable to obtain a material with sufficient inorganic filler loading degree to prepare a layer that prevents adhesion of part and support.

Furthermore, it has surprisingly been found that the use of a ceramic feedstock according to the present invention, when used as a fusion barrier, helps to prevent distortion and/or breakage during debinding and sintering, which often occurs when parts are produced, for example, by metal fused filament fabrication. This advantage is also connected to another advantage, namely a reduced warpage and, resulting therefrom, an improved printability.

A further advantage of the present invention is that support structures, which are often required for printing, debinding and sintering, can be more easily removed. This in turn facilitates the automation of processes.

The invention is specified in more detail in claim 1.

For the sake of clarity and completeness it is indicated that the sum of all components does not exceed 100 vol.% with respect to the total volume of the feedstock. Unless indicated otherwise, the same holds true for any other of the below mentioned values in respect of any other components.

The ceramic feedstock comprises as component a) 5 to 15% by volume, preferably 7 to 10% by volume, based on the total volume of the ceramic feedstock, of at least one ceramic material.

The terms "component (a)" and "ceramic material" for the purpose of the present invention are synonymous and are used interchangeably throughout the present invention.

As component a), any known ceramic material can be used. Preferably, a ceramic material with no or with low sintering activity is used as component a).

"A ceramic material" means precisely one ceramic material as well as mixtures of two or more ceramic materials. In the context of the present invention, the term "ceramic material" means a non-metallic compound of a metal or a first metalloid, and a non-metal or a second metalloid.

"A metal" means precisely one metal and also mixtures of two or more metals. The same relies to "a non-metal" and "a first metalloid", as well as "a second metalloid". "A non-metal" means precisely one non-metal and also mixtures of two or more non-metals. "A first metalloid" means precisely one first metalloid and also mixtures of two or more first metalloids. "A second metalloid" means precisely one second metalloid and also mixtures of two or more second metalloids.

Non-metals are known per se to the person skilled in the art. The non-metal according to the present invention can be selected from any non-metal of the periodic table. Preferably, the at least one non-metal is selected from the group consisting of carbon, nitrogen, oxygen, phosphorus and sulfur.

Metalloids are as well known per se to the skilled person. The first metalloid and the second metalloid can be selected from any metalloid of the periodic table. Preferably, the first metalloid and/or the second metalloid are selected from the group consisting of boron and silicon. It should be clear that the first metalloid and the second metalloid differ from each other. For example, if the first metalloid is boron, then the second metalloid is selected from any other metalloid of the periodic table of the elements besides boron.

The ceramic material of the present invention is selected from the group consisting of oxides, carbides, borides, nitrides and silicides. In a preferred embodiment the ceramic material is selected from the group consisting of MgO, CaO, SiO₂, Na₂O, Al₂O₃, calcinated alumina, ZrO₂, Y₂O₃, SiC, Si₃N₄, TiB, BN, TiN, TiO₂, Ti₂O₃ and AIN. Particularly preferred, the ceramic material is selected from the group consisting of Al₂O₃, calcinated alumina, ZrO₂ and Y₂O₃.

For the preparation of the ceramic material, the respective material may be pulverized. To pulverize the ceramic material, any method known to the person skilled in the art can be used. For example, the ceramic material can be ground. The grinding for example can take place in a classifier mill, in a hammer mill or in a ball bill.

The particle sizes of the ceramic material used as component a) are preferably from 0.1 to 125 µm, particularly preferably from 0.1 to 100 µm, more preferably from 0.1 to 90 µm (measured by Alpine Air Sieve determined as D90 in % by weight).

The ceramic feedstock comprises as component b) 80 to 94% by volume, preferably 86 to 91% by volume, based on the total volume of the ceramic feedstock, of at least one binder (B).

The terms "component b)" and "binder (B)" for the purpose of the present invention are synonymous and are used interchangeably throughout the present invention.

The binder (B) comprises a component b1) which is at least one polymer (P).

Preferably, the binder (B) comprises 50 to 100% by weight, more preferably 85 to 100% by weight, even more preferably 85 to 100 by weight, most preferably 85 to 95% of the at least one polymer (P), based on the total weight of the binder (B), as component b1).

Preferably, the at least one polymer (P) is a polyoxymethylene (POM).

Within the context of the present invention, it is preferred to employ polyoxygen-ethylene (POM) with a high viscosity (measured according to ISA 1133). Preferably, the POM has a melt viscosity rate (MVR) of 2 to 10 cm³/10 min, more preferably of 2 to 5 cm³/min. An example of a commercially available high viscosity POM is Ultraform^{®} H4320 AT.

As component b1), at least one polyoxymethylene (POM) may be used. "At least one polyoxymethylene (POM)" within the present invention means precisely one polyoxymethylene (POM) and also mixtures of two or more polyoxymethylenes (POM).

For the purpose of the present invention, the term "polyoxymethylene (POM)" encompasses both, polyoxymethylene (POM) itself, i. e. polyoxymethylene (POM) homopolymers, and also polyoxymethylene (POM) copolymers and polyoxymethylene (POM) terpolymers.

Polyoxymethylene (POM) homopolymers usually are prepared by polymerization of a monomer selected from a formaldehyde source (b1a).

The term "formaldehyde source b1a) relates to substances which can liberate formaldehyde under the reaction conditions of the preparation of polyoxymethylene (POM).

The formaldehyde sources b1a) are advantageously selected from the group of cyclic or linear formals, in particular from the group consisting of formaldehyde and 1,3,5-trioxane. 1,3,5-trioxane is particularly preferred.

Polyoxymethylene (POM) copolymers are known per se and are commercially available. They are usually prepared by polymerization of trioxane as main monomer. In addition, comonomers are concomitantly used. The main monomers are preferably selected from among trioxane and other cyclic or linear formals or other formaldehyde sources b1a).

The expression "main monomers" is intended to indicate that the proportion of these monomers in the total amount of monomers, i. e. the sum of main monomers and comonomers, is greater than the proportion of the comonomers in the total amount of monomers.

Quite generally, polyoxymethylene (POM) according to the present invention has at least 50 mol-% of repeating units -CH₂O- in the main polymer chain. Suitable polyoxymethylene (POM) copolymers are in particular those which comprise the repeating units -CH₂O- and from 0.01 to 20 mol-%, in particular from 0.1 to 10 mol-% and very particularly preferably from 0.5 to 6 mol-% of repeating units of the formula (I), 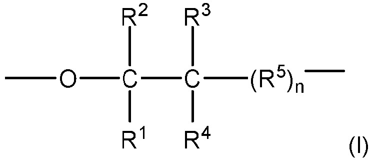 wherein
- R¹ to R⁴: are each independently of one another selected from the group consisting of H, C₁-C₄-alkyl and halogen-substituted C₁-C₄-alkyl;
- R⁵: is selected from the group consisting of a chemical bond, a (-CR^{5a}R^{5b}-) group and a (-CR^{5a}R^{5b}O-) group,
wherein
- R^{5a} and R^{5b}: are each independently of one another selected from the group consisting of H and unsubstituted or at least monosubstituted C₁-C₄-alkyl, wherein the substituents are selected from the group consisting of F, Cl, Br, OH and C₁-C₄-alkyl;
- n: is 0, 1, 2 or 3.

If n is 0, then R⁵ is a chemical bond between the adjacent carbon atom and the oxygen atom. If R⁵ is a (-CR^{5a}R^{5b}O-) group, then the oxygen atom (O) of the (-CR^{5a}R^{5b}O-) group is bound to another carbon atom (C) of formula (I) and not to the oxygen atom (O) of formula (I). In other words, formula (I) does not comprise peroxide compounds. The same holds true for formula (II).

Within the context of the present invention, definitions such as C₁-C₄-alkyl, as for example defined above for the radicals R¹ to R⁴ in formula (I), mean that this substituent (radical) is an alkyl radical with a carbon atom number from 1 to 4. The alkyl radical may be linear or branched and also optionally cyclic. Alkyl radicals which have both a cyclic component and also a linear component likewise fall under this definition. Examples of alkyl radicals are methyl, ethyl, n-propyl, iso-propyl, butyl, iso-butyl, sec-butyl and tert-butyl.

In the context of the present invention, definitions, such as halogen-substituted C₁-C₄-alkyls, as for example defined above for the radicals R¹ to R⁴ in formula (I), mean that the C₁-C₄-alkyl is substituted by at least one halogen. Halogens are F (fluorine), Cl (chlorine), Br (bromine) and I (iodine).

The repeating units of formula (I) can advantageously be introduced into the polyoxymethylene (POM) copolymers by ring-opening of cyclic ethers as first comonomers (b1b). Preference is given to first comonomers (b1b) of the general formula (II), 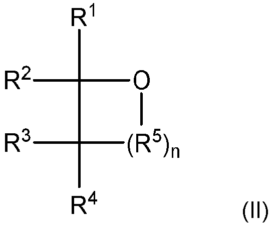 wherein
R¹ to R⁵ and n have the meanings as defined above for the general formula (I).

As first comonomers b1b) mention may be made for example of ethylene oxide, 1,2-propylene oxide, 1,2-butylene oxide, 1,3-butylene oxide, 1,3-dioxane, 1,3-dioxolane and 1,3-dioxepane (= butanediol formal, BUFO) as cyclic ethers and also linear oligoformals or polyformals such as polydioxolane or polydioxepane. 1,3-dioxolane and 1,3-dioxepane are particularly preferred first comonomers (b1b), very particular preferred is 1,3-dioxepane as first comonomer b1b).

Polyoxymethylene (POM) polymers which can be obtained by reaction of a formaldehyde source together with the first comonomer (b1b) and a second comonomer (b1c) are likewise suitable. The addition of the second comonomer (b1c) makes it possible to prepare, in particular, polyoxymethylene (POM) terpolymers.

The second comonomer (b1c) is preferably selected from the group consisting of a compound of formula (III) and a compound of formula (IV), 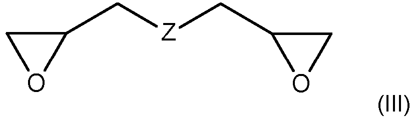 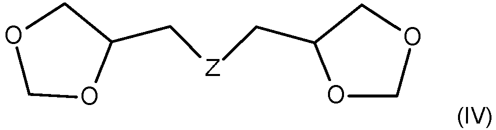 wherein
- Z: is selected from the group consisting of a chemical bond, an (-O-) group and an (-O-R⁶-O-) group,
wherein
- R⁶: is selected from the group consisting of unsubstituted C₁-C₈-alkylene and C₃-C₈-cycloalkylene.

Within the context of the present invention, definitions such as C₁-C₈-alkylene means C₁-C₈-alkanediyle. The C₁-C₈-alkylene is a hydrocarbon having two free valences and a carbon atom number of from 1 to 8. The C₁-C₈-alkylene according to the present invention can be branched or unbranched.

Within the context of the present invention, definitions such as C₃-C₈-cycloalkylene means C₃-C₃-cycloalkanediyle. A C₃-C₈-cycloalkylene is a cyclic hydrocarbon having two free valences and a carbon atom number of from 3 to 8. Hydrocarbons having two free valences, a cyclic and also a linear component, and a carbon atom number of from 3 to 8 likewise fall under this definition.

Preferred examples of the second comonomer (b1c) are ethylene diglycidyl, diglycidyl ether and diethers prepared from glycidyl compounds and formaldehyde, dioxane or trioxane in a molar ratio of 2 : 1 and likewise diethers prepared from 2 mol of a glycidyl compound and 1 mol of an aliphatic diol having from 2 to 8 carbon atoms, for example the diglycidyl ether of ethylene glycol, 1,4-butanediol, 1,3-butanediol, 1,3-cyclo-butanediol, 1,2-propanediol and 1,4-cyclohexanediol.

In a preferred embodiment component b1) is a polyoxymethylene (POM) copolymer which is prepared by polymerization of from at least 50 mol-% of a formaldehyde source, from 0.01 to 20 mol-% of at least one first comonomer (b1b) and from 0 to 20 mol-% of at least one second comonomer (b1c).

In a particularly preferred embodiment component (b1) is a polyoxymethylene (POM) copolymer which is prepared by polymerization of from 80 to 99.98 mol-%, preferably from 88 to 99 mol-% of a formaldehyde source, from 0.1 to 10 mol-%, preferably from 0.5 to 6 mol-% of at least one first comonomer (b1b) and from 0.1 to 10 mol-%, preferably from 0,5 to 6 mol-% of at least one second comonomer (b1c).

In a further preferred embodiment component b1) is a polyoxymethylene (POM) copolymer which is prepared by polymerization of from at least 50 mol-% of a formaldehyde source, from 0.01 to 20 mol-% of at least one first comonomer (b1b) of the general formula (II) and from 0 to 20 mol-% of at least one second comonomer (b1c) selected from the group consisting of a compound of formula (III) and a compound of formula (IV).

Another subject of the present invention is therefore a filament, wherein component b1) is a polyoxymethylene (POM) copolymer which is prepared by polymerization of
- from at least 50 mol-% of a formaldehyde source (b1a),
- from 0.01 to 20 mol-% of at least one first comonomer (b1b) of the general formula (II) 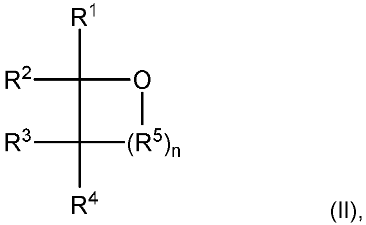 wherein
   - R¹ to R⁴: are each independently of one another selected from the group consisting of H, C₁-C₄-alkyl and halogen-substituted C₁-C₄-alkyl;
   - R⁵: is selected from the group consisting of a chemical bond, a (-CR^{5a}R^{5b}-) group and a (-CR^{5a}R^{5b}O-) group,
   wherein
   - R^{5a} and R^{5b}: are each independently of one another selected from the group consisting of H and unsubstituted or at least monosubstituted C₁-C₄-alkyl,
   wherein the substituents are selected from the group consisting of F, Cl, Br, OH and C₁-C₄-alkyl;
   - n: is 0, 1, 2 or 3;
   and
- from 0 to 20 mol-% of at least one second comonomer (b1c) selected from the group consisting of a compound of formula (III) and a compound of formula (IV) 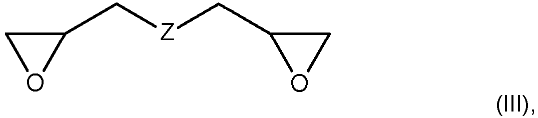 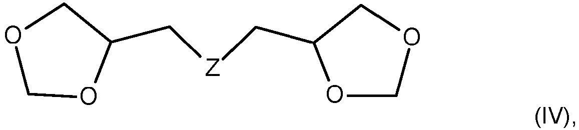 wherein
   - Z: is selected from the group consisting of a chemical bond, an (-O-) group and an (-O-R⁶-O-) group,
   wherein
   - R⁶: is selected from the group consisting of unsubstituted C₁-C₈-alkylene and C₃-C₈-cycloalkylene.

In a preferred embodiment of the present invention at least some of the OH-end groups of the polyoxymethylene (POM) are capped. Methods for capping OH-end groups are known to the skilled person. For example, the OH-end groups can be capped by etherification or esterification.

Preferred polyoxymethylene (POM) copolymers have melting points of at least 150°C and weight average molecular weights M_{W} in the range from 5 000 g/mol to 300 000 g/mol, preferably from 50 000 g/mol to 300 000 g/mol, particularly preferably in the range from 100 000 g/mol to 250 000 g/mol.

Particular preference is given to polyoxymethylene (POM) copolymers having a polydispersity (M_{w}/Mₙ) of from 2 to 15, preferably from 2.5 to 12, particularly preferably from 3 to 9.

The measurement of the weight average molecular weight (M_{w}) and the number average molecular weight (Mₙ) is generally carried out by gel permeation chromatography (GPC). GPC is also known as sized exclusion chromatography (SEC).

Methods for the preparation of polyoxymethylene (POM) are known to those skilled in the art.

Further, the binder (B) may comprise a component b2).

Preferably, the binder (B) comprises 0 to 20% by weight, preferably 0 to 15% by weight, most preferably 5 to 15% by weight of component b2).

Preferably component b2) is at least one polyolefin (PO). "At least one polyolefin (PO)" within the present invention means precisely one polyolefin (PO) and also mixtures of two or more polyolefins (PO).

Polyolefins (PO) are known per se and are commercially available. They are usually prepared by polymerization of C₂-C₈-alkene monomers, preferably by polymerization of C₂-C₄-alkene monomers.

Within the context of the present invention, C₂-C₈-alkene means unsubstituted or at least monosubstituted hydrocarbons having 2 to 8 carbon atoms and at least one carbon-carbon double bond (C-C-double bond). "At least one carbon-carbon double bond" means precisely one carbon-carbon double bond and also two or more carbon-carbon double bonds.

In other words, C₂-C₈-alkene means that the hydrocarbons having 2 to 8 carbon atoms are unsaturated. The hydrocarbons may be branched or unbranched. Examples for C₂-C₈-alkenes with one C-C-double bond are ethene, propene, 1-butene, 2-butene, 2-methyl-propene (= isobutylene), 1-pentene, 2-pentene, 2-methyl-1-butene, 3-methyl-1-butene, 1-hexene, 2-hexene, 3-hexene and 4-methyl-1-pentene. Examples for C₂-C₈-alkenes having two or more C-C-double bonds are allene, 1,3-butadiene, 1,4-pentadiene, 1,3-pentadiene, 2-methyl-1,3-butadiene (= isoprene).

If the C₂-C₈-alkenes have one C-C-double bond, the polyolefins (PO) prepared from those monomers are linear. If more than one double bond is present in the C₂₋-C₈-alkenes, the polyolefins (PO) prepared from those monomers can be crosslinked. Linear polyolefins (PO) are preferred.

It is also possible to use polyolefin (PO) copolymers, which are prepared by using different C₂-C₈-alkene monomers during the preparation of the polyolefins (PO).

Preferably, the polyolefins (PO) are selected from the group consisting of polymethylpentene, poly-1-butene, polyisobutylene, polyethylene and polypropylene. Particular preference is given to polyethylene and polypropylene and also their copolymers as are known to those skilled in the art and are commercially available, in particular the polyolefin (PO) is polyethylene.

In one embodiment, it is preferred that the polyolefin (PO) has a melting point of 100 to 170°C, in particular polyethylene.

The polyolefins (PO) can be prepared by any polymerization process known to the skilled person, preferably by free radical polymerization, for example by emulsion, bead, solution or bulk polymerization. Possible initiators are, depending on the monomers and the type of polymerization, free radical initiators such as peroxy compounds and azo compounds with the amounts of initiator generally being in the range from 0.001 to 0.5% by weight, based on the monomers.

The binder (B) may comprise a further polymer (FP) as component b3).

The terms "component b3)" and "further polymer (FP)" for the purpose of the present invention are synonymous and are used interchangeably throughout the present invention.

Preferably, the binder (B) comprises 0 to 10% by weight, preferably 0 to 5% by weight, most preferably 0 to 3% by weight based on the total weight of the binder (B), as component b3).

Component (b3) according to the present invention is at least one further polymer (FP). "At least one further polymer (FP)" within the present invention means precisely one further polymer (FP) and also mixtures of two or more further polymers (FP).

As already stated above, the at least one further polymer (FP) differs from component (b1), the polyoxymethylene (POM), and component (b2), the polyolefin (PO).

According to the present invention, the at least one further polymer (FP) is preferably selected from the group consisting of a polyether, a polyurethane, a polyepoxide, a polyamide, a vinyl aromatic polymer, a poly(vinyl ester), a poly(vinyl ether), a poly(alkyl(meth)acrylate) and copolymers thereof.

In one embodiment of the present invention the binder (B) contains at least one further polymer (FP), wherein the further polymer (FP) is at least one further polymer (FP) selected from the group consisting of a polyether, a polyurethane, a polyepoxide, a polyamide, a vinyl aromatic polymer, a poly(vinyl ester), a poly(vinyl ether), a poly(alkyl (meth)acrylate) and copolymers thereof.

Preferably, component (b3), the at least one further polymer (FP), is selected from the group consisting of a poly(C₂-C₆-alkylene oxide), an aliphatic polyurethane, an aliphatic uncrosslinked epoxide, an aliphatic polyamide, a vinyl aromatic polymer, a poly(vinyl ester) of an aliphatic C₁-C₈ carboxylic acid, a poly(vinyl ether) of a C₁-C₈ alkyl vinyl ether, a poly(alkyl(meth)acrylate) of a C₁₋₈-alkyl and copolymers thereof.

Preferred at least one further polymers (FP) are described in more detail below.

Polyethers comprise repeating units of formula (V). 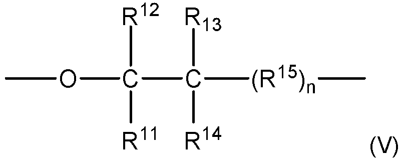 wherein
- R¹¹ to R¹⁴: are each independently of one another selected from the group consisting of H, C₁-C₄-alkyl and halogen-substituted C₁-C₄-alkyl;
- R¹⁵: is selected from the group consisting of a chemical bond, a (-CR^{15a}R^{15b}-) group and a (-CR^{15a}R^{15b}O-) group,
wherein
- R^{15a} and R^{15b}: are each independently of one another selected from the group consisting of H and unsubstituted or at least monosubstituted C₁-C₄-alkyl, wherein the substituents are selected from the group consisting of F, Cl, Br, OH and C₁-C₄-alkyl;
- n: is 0, 1, 2 or 3.

If n is 0, then R¹⁵ is a chemical bond between the adjacent carbon atom and the oxygen atom. If R¹⁵ is a (-CR^{15a}R^{15b}O-) group, then the oxygen atom (O) of the (-CR^{15a}R^{15b}O-) group is bound to another carbon atom (C) of formula (V) and not to the oxygen atom (O) of formula (V). In other words, formula (V) does not comprise peroxide compounds. The same holds true for formula (VI).

Typical polyethers as well as their preparation are known to the skilled person.

A preferred polyether according to the present invention is, for example, a poly(alkylene glycol), also known as a poly(alkylene oxide).

Polyalkylene oxides and their preparation are known to the skilled person. They are usually synthesized by interaction of water and a bi- or polyvalent alcohol with cyclic ethers, i. e. alkylene oxides, of the general formula (VI). The reaction is catalyzed by an acidic or basic catalyst. The reaction is a so called ring-opening polymerization of the cyclic ether of the general formula (VI). 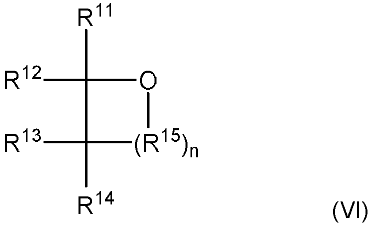 **wherein**
R¹¹ to R¹⁵ have the same meanings as defined above for formula (V).

A preferred poly(alkylene oxide) according to the present invention is derived from monomers of the general formula (VI) having 2 to 6 carbon atoms in the ring. In other words, preferably, the poly(alkylene oxide) is a poly(C₂-C₆-alkylene oxide). Particular preference is given to a poly(alkylene oxide) derived from monomers selected from the group consisting of 1,3-dioxolane, 1,3-dioxepane and tetrahydrofuran (IUPAC-name: oxolane). In other words, particularly preferably, the poly(alkylene oxide) is selected from the group consisting of poly-1,3-dioxolane, poly-1,3-dioxepane and polytetrahydrofuran.

In one embodiment, the poly(alkylene oxide) can comprise OH-end groups. In another embodiment, at least some of the OH-end groups of the poly(alkylene oxide) can be capped. Methods for capping OH-end groups are known to the skilled person. For example, the OH-end groups can be capped by etherification or esterification.

The weight average molecular weight of the poly(alkylene oxide) is preferably in the range of from 1 000 to 150 000 g/mol, particular preferably from 15 00 to 120 000 g/mol and more preferably in the range of from 2 000 to 100 000 g/mol.

A polyurethane is a polymer having carbamate units. Polyurethanes as well as their preparation is known to the skilled person.

Within the present invention, aliphatic polyurethanes are preferred. They can, for example, be prepared by polyaddition of aliphatic polyisocyanates and aliphatic polyhydroxy compounds. Among the polyisocyanates, diisocyanates of the general formula (VII) are preferred

OCN-R⁷-NCO (VII),

wherein
- R⁷: is a substituted or unsubstituted C₁-C₂₀-alkylene or C₄-C₂₀-cycloalkylene, wherein the substituents are selected from the group consisting of F, Cl, Br and C₁-C₆-alkyl.

Preferably R⁷ is a substituted or unsubstituted C₂₋C₁₂-alkylene or C₆-C₁₅-cycloalkylene.

Within the context of the present invention, definitions such as C₁-C₂₀-alkylene means C₁-C₂₀-alkanediyle. The C₁-C₂₀-alkylene is a hydrocarbon having two free valences and a carbon atom number of from 1 to 20. The C₁-C₂₀-alkylene according to the present invention can be branched or unbranched.

Within the context of the present invention, definitions such as C₄-C₂₀-cycloalkylene means C₄-C₂₀-cycloalkanediyle. A C₄-C₂₀-cycloalkylene is a cyclic hydrocarbon having two free valences and a carbon atom number of from 4 to 20. Hydrocarbons having two free valences, a cyclic and also a linear component and a carbon atom number of from 4 to 20 likewise fall under this definition.

Preferred diisocyanates are selected from the group consisting of hexamethylenediisocyanate, 2,2,4-trimethyl hexamethylenediisocyanate, 2,4,4-trimethyl hexamethylenediisocyanate, 1,2-diisocyanatomethyl cyclohexane, 1,4-diisocyanatomethyl cyclohexane and isophorondiisocyanate (IUPAC-name: 5-isocyanato-1-(isocyanatomethyl)-1,3,3-trimethyl-cyclohexane).

The diisocyanates may also be used in oligomeric, for example dimeric or trimeric form. Instead of the polyisocyanates, it is also possible to use conventional blocked polyisocyanates which are obtained from the stated isocyanates, for example by an addition reaction of phenol or caprolactam.

Suitable polyhydroxy compounds for the preparation of aliphatic polyurethanes are, for example, polyesters, polyethers, polyesteramides or polyacetales or mixtures thereof.

Suitable chain extenders for the preparation of the polyurethanes are low molecular weight polyols, in particular diols and polyamines, in particular diamines or water.

The polyurethanes are preferably thermoplastic and therefore preferably essentially uncrosslinked, i. e. they can be melted repeatedly without significant signs of decomposition. Their reduced specific viscosities are as a rule from 0.5 to 3 dl/g, preferably from 1 to 2 dl/g measured at 30°C in dimethylformamide.

A polyepoxide comprises at least two epoxide groups. The epoxide groups are also known as glycidyl or oxirane groups. "At least two epoxide groups" mean precisely two epoxide groups and also three or more epoxide groups.

Polyepoxides and their preparation is known to the person skilled in the art. For example, polyepoxides are prepared by the reaction of epichlorhydrine (IUPAC-name: chlormethyloxirane) and a diol, a polyol or a dicarboxylic acid. Polyepoxides prepared in this way are polyethers having epoxide end groups.

Another possibility to prepare polyepoxides is the reaction of glycidyl(meth)acrylate (IUPAC-name: oxiran-2-ylmethyl-2-methylprop-2-enoate) with polyolefins or polyacrylates. This results in polyolefins or polyacrylates having epoxy end groups.

Preferably, aliphatic uncrosslinkedpolyepoxides are used. Copolymers of epichlorhydrine and 2,2-bis-(4-hydroxyphenyl)-propane (bisphenol A) are particularly preferred.

Component b3) (the at least one further polymer (FP)) can also comprise a polyamide. Aliphatic polyamides are preferred.

The intrinsic viscosity of suitable polyamides is generally from 150 to 350 ml/g, preferably from 180 to 275 ml/g. Intrinsic viscosity is determined here from a 0.5% by weight solution of the polyamide in 96% by weight sulfuric acid at 25°C in accordance with ISO 307.

Preferred polyamides are semicrystalline or amorphous polyamides.

Examples of polyamides suitable as component (b3) are those that derive from lactams having from 7 to 13 ring members. Other suitable polyamides are those obtained through reaction of dicarboxylic acids with diamines.

Examples that may be mentioned of polyamides that derive from lactams are polyamides that derive from polycaprolactam, from polycaprylolactam, and/or from polylaurolactam.

If polyamides are used that are obtainable from dicarboxylic acids and diamines, dicarboxylic acids that can be used are alkanedicarboxylic acids having from 6 to 14 carbon atoms, preferably from 6 to 10 carbon atoms. Aromatic dicarboxylic acids are also suitable.

Examples that may be mentioned here as dicarboxylic acids are adipic acid, azelaic acid, sebacic acid, dodecanedicarboxylic acid, and also terephthalic acid and/or isophthalic acid.

Examples of suitable diamines are alkanediamines, having from 4 to 14 carbon atoms, in particular alkanediamines having from 6 to 8 carbon atoms, and also aromatic diamines, for example m-xylylenediamine, di(4-aminophenyl)methane, di(4-aminocyclohexyl)methane, 2,2-di(4-aminophenyl)propane, 2,2-di(4-aminocyclohexyl)-propane, and 1,5-diamino-2-methylpentane.

Other suitable polyamides are those obtainable through copolymerization of two or more of the monomers mentioned above and mentioned below, and mixtures of a plurality of polyamides in any desired mixing ratio.

Preferred polyamides are polyhexamethyleneadipamide, polyhexamethylene-sebacamide, and polycaprolactam, and also nylon-6/6,6, in particular having a proportion of from 75 to 95% by weight of caprolactam units.

Particular preference is given to mixtures of nylon-6 with other polyamides, in particular with nylon-6/6,6 (PA 6/66), particular preference being given to mixtures of from 80 to 50% by weight of PA 6 and from 20 to 50% by weight of PA 6/66, where the PA 6/66 comprises from 75 to 95% by weight of caprolactam units, based on the total weight of the PA 6/66 in the mixture.

The following, non-exclusive list comprises the abovementioned polyamides, and other suitable polyamides, and also the monomers comprised.

### AB polymers:

- PA 4: Pyrrolidone
- PA 6: ε-Caprolactam
- PA 7: Ethanolactam
- PA 8: Caprylolactam
- PA 9: 9-Aminopelargonic acid
- PA 11: 11-Aminoundecanoic acid
- PA 12: Laurolactam

### AA/BB polymers:

- PA 46: Tetramethylenediamine, adipic acid
- PA 66: Hexamethylenediamine, adipic acid
- PA 69: Hexamethlyenediamine, azelaic acid
- PA 610: Hexamethylenediamine, sebacic acid
- PA 612: Hexamethylenediamine, decanedicarboxylic acid
- PA 613: Hexamethylenediamine, undecanedicarboxylic acid
- PA 1212: 1,12-Dodecanediamine, decanedicarboxylic acid
- PA 1313: 1,13-Diaminotridecane, undecanedicarboxylic acid
- PA 6T: Hexamethylenediamine, terephthalic acid
- PA MXD6: m-Xylylenediamine, adipic acid

- PA 6I: Hexamethylenediamine, isophthalic acid
- PA 6-3-T: Trimethylhexamethylenediamine, terephthalic acid
- PA 6/6T: (see PA 6 and PA 6T)
- PA 6/66: (see PA 6 and PA 66)
- PA 6/12: (see PA 6 and PA 12)
- PA 66/6/610: (see PA 66, PA 6 and PA 610)
- PA 6I/6T: (see PA 6I and PA 6T)
- PA PACM 6: Diaminodicyclohexylmethane, adipic acid
- PA PACM 12: Diaminodicyclohexylmethane, laurolactam
- PA 6I/6T/PACM: as PA 6I/6T + diaminodicyclohexylmethane
- PA 12/MACMI: Laurolactam, dimethyldiaminodicyclohexylmethane, isophthalic acid
- PA 12/MACMT: Laurolactam, dimethyldiaminodicyclohexylmethane, terephthalic acid
- PA PDA-T: Phenylenediamine, terephthalic acid

Preferred polyamides are PA 6, PA 66 and PA PACM 6.

Vinyl aromatic polymers are polyolefins having unsubstituted or at least monosubstituted styrene as monomer unit. Suitable substituents are, for example, C₁-C₆-alkyls, F, Cl, Br and OH. Preferred vinyl aromatic polymers are selected from the group consisting of polystyrene, poly-α-methylstyrene and copolymers thereof with up to 30% by weight of comonomers selected from the group consisting of acrylic esters, acrylonitrile and methacrylonitrile.

Vinyl aromatic polymers are commercially available and known to the person skilled in the art. The preparation of these polymers is also known to the person skilled in the art.

Preferably, the vinyl aromatic polymers are prepared by free radical polymerization, for example by emulsion, bead, solution or bulk polymerization. Possible initiators are, depending on the monomers and the type of polymerization, free radical initiators such as peroxide compounds and azo compounds with the amounts of initiator generally being in the range from 0.001 to 0.5% by weight, based on the monomers.

Poly(vinyl esters) and their preparation are known to the skilled person. Poly(vinyl esters) are preferably prepared by polymerization of vinyl esters. In a preferred embodiment of the present invention, the vinyl esters are vinyl esters of aliphatic C₁-C₆ carboxylic acids. Preferred monomers are vinyl acetate and vinyl propionate. These monomers form poly(vinyl acetate) and poly(vinyl propionate) polymers.

Poly(vinyl ethers) are prepared by polymerization of vinyl ether monomers. Poly(vinyl ethers) and their preparation are known to the skilled person. In a preferred embodiment, the vinyl ethers are vinyl ethers of aliphatic C₁-C₈ alkyl ethers. Preferred monomers are methyl vinyl ether and ethyl vinyl ether, forming poly(methyl vinyl ether) and poly(ethyl vinyl ether) during the polymerization.

Preferably, the poly(vinyl ethers) are prepared by free radical polymerization, for example by emulsion, bead, solution, suspension or bulk polymerization. Possible initiators are, depending on the monomers and the type of polymerization, free radical initiators such as peroxide compounds and azo compounds with the amounts of initiator generally being in the range from 0.001 to 0.5% by weight, based on the monomers.

Poly(alkyl(meth)acrylate) within the present invention comprises poly(alkyl acrylate), poly(alkyl methacrylates) and copolymers thereof. Poly(alkyl(meth)acrylate) comprises units derived from monomers of formula (VIII), 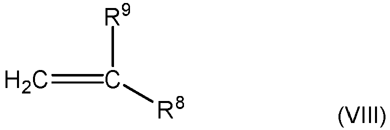 wherein
- R⁸: is selected from the group consisting of H and C₁-C₈-alkyl and
- R⁹: is a radical of formula (IX) 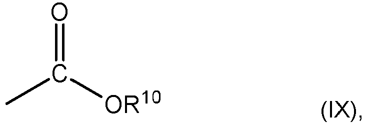
wherein
- R¹⁰: is a C₁-C₁₄-alkyl.

Preferably, R⁸ is selected from the group consisting of H and C₁-C₄-alkyl, particularly preferably R⁸ is H or methyl. Preferably, R¹⁰ is a C₁-C₈-alkyl, particularly preferably, R¹⁰ is methyl or ethyl.

If R⁸ in formula (VIII) is H and R⁹ is a radical of formula (IX) and R¹⁰ in formula (IX) is methyl, then the monomer of formula (VIII) is methyl acrylate.

If R⁸ in formula (VIII) is H and R⁹ is a radical of formula (IX) and R¹⁰ in formula (IX) is ethyl, the monomer of formula (VIII) is ethyl acrylate.

If R⁸ in formula (VIII) is methyl and R⁹ is a radical of formula (IX), then the monomers of formula (VI) are methacrylic esters.

Poly(alkyl(meth)acrylates) comprise as monomers preferably 40 to 100% by weight of methacrylic esters, particularly preferably 70 to 100% by weight of methacrylic esters and more preferably from 80 to 100% by weight of methacrylic esters, each based on the total amount of the poly(alkyl(meth)acrylates).

In another preferred embodiment, the poly(alkyl(meth)acrylates) comprise as monomers from 20 to 100% by weight of methyl acrylate, ethyl acrylate or a mixture thereof, preferably from 40 to 100% by weight of methyl acrylate, ethyl acrylate or a mixture thereof and particularly preferably from 50 to 100% by weight of methyl acrylate, ethyl acrylate or mixtures of thereof, each based on the total weight of the poly(alkyl(meth)acrylate).

Such polymers of monomers of the formula (VIII) with or without further monomers can be prepared in a conventional, preferably a free radical polymerization, for example an emulsion, bead, solution or bulk polymerization (cf. Kirk-Othmer, Encyclopedia of Chemical Technology 3rd Ed., Vol. 1., pp. 330-342, Vol. 18, pp. 720-755, J. Wiley; H. Rauch-Puntigam, Th. Völker, Acryl- und Methacrylverbindungen). Possible initiators depending on the monomers and the type of polymerization are free radical initiators, such as peroxy or peroxo compounds and azo compounds. The amount of initiator being in general within the range from 0.001 to 0.5% by weight, based on the monomers.

Suitable initiators for an emulsion polymerization are, for example, peroxodisulfates and redox systems for a bulk polymerization not only peroxides, such as dibenzoyl peroxide or dilauroyl peroxide, but also azo compounds, for example azobisisobutyrodinitrile, similarly in the case of the solution or bead polymerization. The molecular weight may be regulated using conventional regulators, in particular mercaptans, e. g. dodecylmercaptan.

Preferably, the polymerization is carried out at elevated temperatures, for example above 50°C. The weight average molecular weight (M_{w}) is in general within the range of from 2 000 to 5 000 000 g/mol, preferably from 20 000 to 3 000 000 g/mol (determination by light scattering; cf. HoubenWeyl, Methoden der Org. Chemie, 4th edition, Volume 14/1, Georg Thieme-Verlag Stuttgart 1961).

The person skilled in the art knows that the monomers described above for the preparation of the components b1), b2) and b3) can undergo changes in their structure during the polymerization reaction. Consequently, the building units of the polymers are not the same as the monomers from which they are derived. However, the person skilled in the art knows which monomers correspond to which building unit of the polymers.

Under the conditions of compounding or processing by fused filament fabrication, virtually no transacetalization occurs between component b1), the polyoxymethylene (POM), and component b3), the at least one further polymer (FP), i. e. virtually no exchange of comonomer units takes place.

In one embodiment of the invention the binder (B) in the core material (CM) comprises, besides component b1), the components b2) and/or b3).

In a preferred embodiment, the binder (B) comprises component b1) and optionally the components b2) and/or b3) in an amount of, each based on the total amount of component b),
b1) 80 to 100% by weight, preferably 85 to 100% by weight, most preferably 85 to 95% by weight of at least one polymer (P),
b2) 0 to 20% by weight, preferably 0 to 15% by weight, most preferably 5 to 15% by weight of at least one polyolefin (PO),
b3) 0 to 10% by weight, preferably 0 to 5% by weight, most preferable 0 to 3% by weight of at last one further polymer (FP),
preferably component B1) is a polyoxymethylene (POM).

In another embodiment of the invention the binder (B) comprises, besides b1), the components b2) and/or b3), wherein
b2) is at least one polyolefin (PO) and
b3) is at least one further polymer (FP), in case the at least one polymer (P) in component b1) is a polyoxymethylene (POM).

The ceramic feedstock comprises as component c) 1 to 5% by volume, preferably 2 to 4% by volume, based on the total volume of the ceramic feedstock of the at least one additive (A).

As component c), at least one additive (A) can be used. "At least one additive (A)" according to the present invention means precisely one additive (A) and also mixtures of two or more additives (A).

The terms "component (c)" and "additive (A)" for the purpose of the present invention are synonymous and are used interchangeably throughout the present invention.

The additive (A) can be selected from any suitable additive known to a person skilled in the art in connection with ceramic feedstocks. Preferably, the additive (A) is at least one dispersing agent, also known as dispersants. Dispersing agents as such are also known to the skilled person. Preferably, the dispersing agent is at least one polyether, most preferably polytetrahydrofuran.

Examples of further dispersing agentsare oligomeric polyethylene oxide having a low molecular weight of from 200 to 600 g/mol stearic acid, stearamides, hydroxystearic acids, fatty alcohols, fatty alcohol, fatty acid esters, sulfonates and block copolymers of ethylene oxide and propylene oxide and also, particularly preferably, polyisobutylene.

Further, the additive (A) may be selected from stabilizers, like UV-stabilizers and/or antioxidants.

The additive (A) may be also selected from pigments, such as organic dyes and/or inorganic pigments.

The additive (A) may be selected from tackifiers, like polymers with a glass transition temperature below room temperature, which is preferably below 25° C and/or terpene-derivatives.

The additive (A) may also be selected from the tackifiers as disclosed in WO 2013/117428 A1. An example for a commercially available tackifier is Acronal^{®} A107.

Based on WO 2013/117428 A1 and applying the definitions of the components of the tackifiers in WO 2013/117428 A1, as tackifiers preferably dispersions are applied comprising at least one in water soluble dispersed polymerisate with a weighted average molecular weight of less than 50000 and a glas transition temperature higher or equal to -40°C to lower or equal 0°C, preferably higher or equal -35°C or equal 0°C, preferable of a monomer mixture comprising
(a) at least 40% by weight of at least one C1 to C20-alkyl (meth) acrylate
(b) 0 to 30% by weight of at least one vinyl aromate
(c) at least 0.1% by weight of at least one acid monomer
(d) 0 to 50% by weight of further monomers,
wherein the amounts of the monomers are based on the sum of all monomers.

Furthermore, tackifiers may be applied as disclosed in US 4,767,813 and as specified in the following 3 paragraphs.

According to US 4,767,813, the tackifier may be rosin or a derivative of rosin having a ring and ball softening temperature from about 25° to 110° C., preferably from about 50° to 110° C.

Suitable tackifiers include rosin, hydrogenated rosin esters, glycerol of rosin such as triglycerol rosin esters, C₂₋₃ alkylene esters of rosin such as triethylene glycol esters of rosin and tripropylene glycol esters of rosin; rosin salts, disproportionated rosin salts, pentaerythritol and the polyterpene resins including alpha and beta pinene. Suitable resins are sold under the tradenames Staybelite Ester 3, Staybelite Ester 10, Pentalyn H and Hercolyn D.

The tackifier resin may be a C₅ or C₉ synthetic tackifier resin having a ring and ball softening point from about 10° to 100° C., preferably from about 50° to 100° C. Suitable resins are sold under the tradenames *Piccovar, Hercotac, Picconal* and *Piccolyte.* These tackifiers are polymerized from C₉ monomers, preferably aromatic and C₅ monomers, preferably aliphatic.

Within the context of the present invention the ceramic feedstock is provided in form of a filament.

Pellets and/or filaments as such are known to a person skilled in the art. The skilled person knows how the before mentioned ceramic feedstock may be transferred into of a pellet or of a filament. Methods for producing filaments are disclosed, for example, in WO 2017/009190.

The material/ceramic feedstock according to the invention can be used as a monofilament, a coextruded filament or by direct extrusion of pellets.

In a preferred embodiment the filament is a monofilament. The filament may exhibit any length and/or diameter as deemed appropriate by the person skilled in the art.

Preferably, the diameter of the filament is 1.5 to 3.5 mm, more preferably 2.0 to 3.1 mm, most preferably 2.6 to 3.0 mm.

In another preferred embodiment the filament is a coextruded filament characterized in that the thickness of coextruded outer layer is ≤ 15% of the total thickness of the filament. The coextruded filament may have the same dimensions in respect of length and/or diameter as mentioned above in connection with the monofilament. Coextruded filament are also assigned as core/shell filaments.

The core of the coextruded filament comprises the components components a), b) and optionally c) as described above. The shell material may be composed of the same material as the core or of at least one or a blend of polymeric materials that are substantially different from the core material. In a preferred embodiment the polymeric components of the core material and the material of the shell are similar to more than 80%.

The filament comprises a core material (CM) coated with a layer of shell material (SM), wherein the core material (CM) comprises the at least one ceramic material, the at least one binder (B) and optionally the at least one additive (A) as described above, and wherein the shell material (SM) comprises at least one thermoplastic polymer (TP), optionally at least one ceramic material and optionally at least one additive.

The layer of shell material (CM) may have any thickness as deemed appropriate by the person skilled in the art.

Preferably, the thickness of the layer of shell material (SM) is 0.03 to 0.5 mm, more preferably 0.09 to 0.3 mm, most preferably 0.1 to 0.25 mm.

The core material (CM) may have diameter as deemed appropriate by the person skilled in the art.

Preferably the diameter of the core material is 1.5 to 3.0 mm, more preferably 1.9 to 2.7 mm, most preferably 2.2 to 2.7 mm.

Preferably, the shell material (SM) comprises the components d) to f).

Component d) comprises 75 to 100% by volume, preferably 85 to 100% by volume, more preferably 95 to 100% by volume, based on the total volume of the shell material (SM) of at least one thermoplastic polymer (TP).

As thermoplastic polymer (TP), the person skilled in the art may select any technical appropriate thermoplastic polymer.

The thermoplastic polymer (TP) may also be identical with one of the polymers used in the binder (B) of the core material (CM).

"At least one thermoplastic polymer (TP)" within the present invention means precisely one thermoplastic polymer (TP) and also mixtures of two or more thermoplastic polymers (TP).

The at least one thermoplastic polymer (TP) may comprise thermoplastic homopolymers, thermoplastic copolymers, as well as blends of thermoplastic polymers.

Preferably, the thermoplastic polymer (TP) is selected from the group of polyoxymethylene (POM), polyolefins (PE) such as polypropylene, polyurethanes (PU), polyamides (PA), polyethers (PETH), polycarbonates (PC), and/or polyesters (PES), such as polylactic acid and blends thereof.

More preferably the thermoplastic polymer (TP) is selected from the group of polyoxymethylene (POM), polypropylene and/or polylactic acid (PLA) and blends thereof.

Component e) consists of 0 to 20% by volume, based on the total volume of the shell material (SM), of the at least one ceramic material.

The at least one ceramic material in the component e) is identical to the ceramic material as defined for the component a) in the core material (CM).

Preferably, the component e) consists of 0% by volume, based on the total volume of the shell material (SM) of the at least one ceramic material and therefore there is preferably no component e) present in the shell material (CM).

However, in the embodiment of the invention wherein the component e) consists of preferably 0% by volume, based on the total volume of the shell material (SM) of the at least one ceramic material there may be traces of ceramic material present in the shell material (SM) of less than t 1% by volume, based on the total volume of the shell material (SM).

Component f) comprises 0 to 25% by volume, preferably 0 to 15% by volume, more preferably 0 to 5% by volume, based on the total weight of the shell material (SM) of the at least one additive (A).

The at least one additive (A) in the component f) is selected from the same compounds as the additive (A) in the component c). The at least one additive (A) of component f) or the combination of additives (A) in component f), may differ individually from the at least one additive (A) of component c) or combination of additives (A) of component c) or be the same in a single embodiment of the invention.

In one embodiment of the invention the core material (CM) comprises the components a), b) and c)
a) 3 to 29% by volume, based on the total volume of the ceramic feedstock, of at least one ceramic material,
b) 51 to 97% by volume, based on the total volume of the ceramic feedstock, of at least one binder (B) comprising component b1)
   b1) at least one polymer (P),
c) 0 to 20% by volume, based on the total volume of the ceramic feedstock, of at least one additive (A)
   and the shell material(SM) comprises the components d) and f)
d) 75 to 100% by volume, based on the total weight of the shell material (SM) of at least one thermoplastic polymer (TP)
e) 0 to 20% by volume, based on the total volume of the shell material (SM) of the at least one ceramic material,
f) 0 to 25% by volume, preferably 0 to 10% by volume, more preferably 0 to 5% by volume, most preferably 0 to 3% by volume, based on the total volume of the shell material (SM) of the at least one additive (A),
wherein the thickness of the layer of shell material (SM) is 0.03 to 0.5 mm, preferably 0.09 to 0.3 mm, more preferably 0.1 to 0.25 mm.

Another subject of the invention is the use of at least one ceramic feedstock according as described above in a three-dimensional (3D) printing process, in particular within a fused filament fabrication (FFP) process and/or by employing the at least one ceramic feedstock in form of a filament.

Another subject of the invention is a process for printing a three-dimensional (3D) object by employing at least one ceramic feedstock according to any of claims 1 to 8, preferably a fused filament fabrication (FFF) process by employing the at least one ceramic feedstock in form of a filament.

It is preferred within the inventive process, that the printed 3D object is a three-dimensional (3D) green body, preferably the 3D green body is obtained by by a fused filament fabrication process, comprising at least the steps a), b), c),
a) providing at least one filament based on at least one ceramic feedstock ( as described above) on a spool to a nozzle,
b) heating the filament to a temperature (T_{M}),
c) depositing of the heated filament obtained in step b) in a build chamber using a layer based additive technique in order to form the three dimensional green-body.

The fused filament fabrication process for the production of three-dimensional objects is well known in the state of the art and detailed explained in the above cited documents. The fused filament fabrication process is also denominated as 3D-printing process.

According to step a), the filament according to the present invention, is provided on a spool to a nozzle. However, it is also possible to be additionally used at least one further filament not being based on at least one ceramic feedstock (as described above). The 3D printing process by using different types of filament can be carried out, for example, batch-wise (in subsequent order) and/or in parallel by employing two or even more printer heads/nozzles.

In a further embodiment of the present invention, a method is carried out, wherein at least one further filament (F2) is employed, the further filament (F2) comprises at least 30% of volume, based on the total volume of the further filament (F2), of at least one inorganic powder (IP) selected from a metal or a metal alloy in order to obtain a 3D green body comprising
i) at least one first fragment (1F) obtained by employing at least one filament based on at least one ceramic feedstock according as defined above and
ii) at least one second fragment (2F) obtained by employing said at least one further filament (F2).

Examples of such further filament (F2) are known to the skilled person and are disclosed, for example, in WO 2016/012486 (monofilaments) or WO 2017/009190 and WO 2018/108639 (both core/shell filaments). Such further filaments (F2) in the sense of the present invention contain at least one inorganic powder (IP), preferably in an amount of 30 to 80% by volume, selected from at least one metal or metal alloy.

"A metal" means precisely one metal as well as mixtures of two or more metals. A metal within the present invention can be selected from any metal of the periodic table of the elements which is stable under the conditions of a fused filament fabrication process and which can form three-dimensional objects. Preferably, the metal is selected from the group consisting of aluminium, yttrium, titanium, zirconium, vanadium, niobium, chromium, molybdenum, tungsten, manganese, iron, carbonyl iron powder (CIP), cobalt, nickel, copper, silver, zinc and cadmium, more preferably, the metal is selected from the group consisting of titanium, niobium, chromium, molybdenum, tungsten, manganese, iron, carbonyl iron powder (CIP), nickel and copper. With particular preference, the metal is selected from the group consisting of titanium, iron and carbonyl iron powder (CIP).

Carbonyl iron powder (CIP) is highly pure iron powder, prepared by chemical decomposition of purified iron pentacarbonyl.

"A metal alloy" means precisely one metal alloy as well as mixtures of two or more metal alloys. Within the context of the present invention, the term "metal alloy" means a solid solution or a partial solid solution, which exhibits metallic properties and comprises a metal and another element. "A metal" means, as stated above precisely one metal and also mixtures of two or more metals. The same applies to "another element". "Another element" means precisely one other element and also mixtures of two or more other elements.

Solid solution metal alloys exhibit a single solid phase microstructure while partial solid solution metal alloys exhibit two or more solid phases. These two or more solid phases can be homogeneous distributed in the metal alloy, but they can also be heterogeneous distributed in the metal alloy.

The metal alloys can be prepared according to any process known to the person skilled in the art. For example, the metal can be melted and the other element can be added to the molten metal. However, it is also possible, to add the metal and the other element directly to the core material (CM) without the preparation of a metal alloy before. The metal alloy will then be formed during the process of the preparation of the three-dimensional object.

If the three-dimensional object to be prepared comprises a metal alloy, the filament can either comprise a powder of the already prepared metal alloy or a mixture of powders of the individual metal alloy constituents, i. e. the metal and the other element as described above. The metal alloy will then form during the preparation of the three-dimensional object.

In a preferred embodiment of the present invention, at least one further filament (F2) is employed which is defined as follows:
Further filament (F2) comprising a core material (CM) coated with a layer of shell material (SM), wherein
the core material (CM) comprises the components a) to c)
a) 30 to 80% by volume, based on the total volume of the core material (CM) of at least one inorganic powder (IP) selected from at least one metal or metal alloy,
b) 20 to 70% by volume, based on the total volume of the core material (CM) of the at least one binder b) comprising component b1)
   b1) at least one polymer (P)
c) 0 to 20% by volume, based on the total volume of the core material (CM) of the at least one additive (A),
   and the shell material(SM) comprises the components d) to f)
d) 75 to 100% by volume, based on the total weight of the shell material (SM) of at least one thermoplastic polymer (TP)
e) 0 to 20% by volume, based on the total volume of the shell material (SM) of the at least one inorganic powder (IP) selected from at least one metal or metal alloy,
f) 0 to 25% by volume, based on the total volume of the shell material (SM) of the at least one additive (A),
wherein the thickness of the layer of shell material (SM) is 0.05 to 0.5 mm.

Furthermore, the at least one further filament (F2) may also be employed in form of monofilament comprising the components a) to c)
a) 30 to 80% by volume, based on the total volume of the core material (CM) of at least one inorganic powder (IP) selected from at least one metal or metal alloy,
b) 20 to 70% by volume, based on the total volume of the core material (CM) of the at least one binder b) comprising component b1)
   b1) at least one polymer (P)
c) 0 to 20% by volume, based on the total volume of the core material (CM) of the at least one additive (A).

It has to be noted that the respective definitions of the further filament (F2) in respect of components such as binder b), polymer (P), additive (A) and/or thermoplastic polymer (TP) are the same as defined above in the context of the inventive ceramic feedstock.

Within the inventive process it is also preferred that the printed 3D object, preferably the 3D green body, more preferably the at least one first fragment (1F) of the 3D green body, is a support structure and/or a separation layer.

According to step b), the filament is heated to a temperature (T_{M}). The temperature (T_{M}) is above the melting point of the binder (B). Methods for the determination of the melting point of the binder (B) are known to the skilled person. For example, the melting point of the binder (B) can be estimated by differential scanning calorimetry (DSC).

In a preferred embodiment according to the present invention, in process step b) the filament is heated to a temperature (T_{M}) that is at least 1°C, preferably at least 5°C and particularly preferably at least 10°C above the melting point of the binder (B).

In another preferred embodiment the filament is heated to a temperature (T_{M}) in the range from 160 to 260°C, preferably between 220 and 250°C.

Another subject of the present invention is therefore a process for the production of a three-dimensional green body, wherein the temperature (T_{M}) in step b) is from 140 to 240 °C.

According to step c), the filament is deposited into a build chamber using the layer-based additive technique. The temperature of the build chamber is usually in the range of from 30 to 100 °C, preferably of from 40 to 90 °C and particularly preferably of from 50 to 80 °C.

In other words, in step a) to c) of the inventive process, the filament generally is initially present in a solid state and thereafter melted and printed to form a three-dimensional object comprising the filament. The so prepared three-dimensional object is also called "three-dimensional green body".

In one embodiment of the present invention, process step c) is followed by a process step d) in which at least a part of the binder (B), and optionally at least a part of the shell material (SM) in case core/shell filaments are employed, are removed from the three-dimensional green body.

Another subject of the present invention is therefore a process for the production of a three-dimensional green body, wherein step c) is followed by a step d), in which at least a part of the acid sensitive components of the binder (B), and optionally at least a part of the acid sensitive components of the shell material (SM) in case core/shell filaments are employed, are removed from the three-dimensional green body to form a three-dimensional brown body.

After the at least partial removal of the binder (B) and optionally at least a part of the shell material (SM), the resulting three-dimensional object is called a "three-dimensional brown body". The three-dimensional brown body comprises the ceramic material, optionally any inorganic powder (IP) selected from metal or metal alloys, as well as the fraction of the binder (B) and optionally the fraction of the shell material (SM) which were not removed during the step d). The person skilled in the art knows that a three-dimensional brown body comprising a ceramic material as inorganic powder (IP) is also called a three-dimensional white body. However, for the purpose of the present invention, the terms "three-dimensional brown body" and "three-dimensional white body" are used synonymous and are interchangeably.

To remove at least part of the binder (B) in process step d) and/or at least a part of the of the shell material (SM), the three-dimensional green body obtained by the fused filament fabrication process is preferably treated with a gaseous acid comprising atmosphere. Appropriate processes are described, for example, in US 2009/0288739 and US 5,145,900. This process step d) is, according to the invention, preferably carried out at temperatures below the melting temperature of the binder (B). Process step d) is preferably carried out at a temperature at least 1°C below the melting point of the binder (B), preferably at least 5°C below the melting point of the binder (B) and particularly preferably at least 10°C below the melting point of the binder (B).

Another subject of the present invention is therefore a process for the production of a three-dimensional brown body, wherein in step d) at least a part of the binder (B) and/or at least a part of the shell material (SM) is removed at a temperature below the melting point of the binder (B) and/or the shell material (SM).

In general, the process step d) is carried out at a temperature in the range of from 20 to 180°C and particularly preferably of from 100 to 150°C. Preferably, process step d) is carried out for a period of from 0.1 to 24h, particularly preferably of from 0.5 to 12h.

The treatment time required depends on the treatment temperature and the concentration of the acid in the treatment atmosphere and also on the size of the three-dimensional object.

Another subject of the present invention is therefore a process for the production of a three-dimensional brown body, wherein in step d) at least a part of the binder and optionally at least a part of the shell material (SM) are removed by catalytic debinding, preferably by acidic treatment.

Suitable acids for process step d) of the present invention are, for example, inorganic acids which are either gaseous at room temperature or can be vaporized at the treatment temperature or below. Examples are hydrogen halides and nitric acid. Hydrogen halides are hydrogen fluoride, hydrogen chloride, hydrogen bromide and hydrogen iodide. Suitable organic acids are those, which have a boiling point at atmosphere pressure of less than 130°C, e. g. formic acid, acetic acid or trifluoroacetic acid and mixtures thereof. Acids with boiling points above 130°C, for example methanesulfonic acid, can also be utilized in process step d) when dosed as a mixture with a lower boiling acid and/or water. Preferred acids for process step d) are nitric acid, a 10% by weight solution of oxalic acid in water or a mixture of 50% by volume of methanesulfonic acid in water.

Furthermore, BF₃ and its adducts with inorganic ethers can be used as acids.

If a carrier gas is used, the carrier gas is generally passed through the acid and loaded with the acid beforehand. The carrier gas, which has been loaded in this way with the acid, is then brought to the temperature at which process step d) is carried out. This temperature is advantageously higher than the loading temperature in order to avoid condensation of the acids. Preferably, the temperature at which process step d) is carried out is at least 1°C, particularly preferably at least 5°C and most preferably at least 10°C higher than the loading temperature.

Preference is given to mixing the acid into the carrier gas by means of a metering device and heating the gas mixture to such a temperature that the acid can no longer condense. Preferably, the temperature is at least 1°C, particularly preferably at least 5°C and most preferably at least 10°C higher than the sublimation and/or vaporization temperature of the acid and/or the carrier gas.

The carrier gas in general is any gas that is inert under the reaction conditions of the step d). A preferred carrier gas according to the present invention is nitrogen.

It is known to the person skilled in the art that not all components which may be comprised by the binder (B) and optionally the shell material (SM) in different embodiments of the invention are removable in step d) due to their chemical and physical properties.

Therefore, the part of binder (B) and optionally shell material (SM) which can be removed in step d) in different embodiments of the invention may vary dependent on the specific compounds used.

Preferably, the step d) is continued until the binder (B) and optionally the shell material (SM) have been removed to an extend of at least 40% by weight, more preferably at least 60% by weight, most preferably at least 80% by weight, particularly preferably at least 90% by weight and more particularly preferably at least 95% by weight based on the total weight of the binder (B) and optionally the shell material (SM). This can be checked, for example, with the height of the weight decrease.

It is known to the person skilled in the art that at the temperatures of the step d) step, the ceramic material and/or inorganic powder (IP) comprised in the three-dimensional green body can undergo chemical and/or physical reactions. In particular, the particles of the inorganic powder (IP) can fuse together and the inorganic powder can undergo solid state phase transitions.

The same holds true for the binder (B) and optionally the shell material (SM). During the step d) step the composition of the binder (B) can change.

Consequently, in one embodiment of the present invention, the ceramic material, the optional inorganic powder (IP), the binder (B) and/or the optional shell material (SM) comprised in the three-dimensional green body obtained in process step d) differs from the respective components comprised in the three-dimensional brown body obtained in process step c).

Process step d) can be followed by a process step e) in which the three-dimensional brown body is sintered. Process step e) is also called sintering. The terms "process step e)" and "sintering" for the purpose of the present invention are synonymous and are used interchangeably throughout the present invention.

Another subject of the present invention is therefore a process for the production of a three-dimensional sintered body, wherein step d) is followed by a step e), in which the three-dimensional brown body is sintered to form a three-dimensional sintered body, especially in case a further filament (F2) as described above is employed.

After the sintering, the three-dimensional object is a three-dimensional sintered body. The three-dimensional sintered body comprises the inorganic powder (IP) and optionally remaining ceramic material and is essentially free of the binder (B) and the optional shell material (SM).

In a preferred embodiment of the present invention, in case the at least one further filament (F2) was additionally employed (beside at least one filament based on the ceramic feedstock) during the preceeding 3D printing procedure of the respective 3D object, the corresponding 3D sintered body obtained by carrying out step e) as described above, is preferably essentially free of any (remaining) ceramic material. For the sake of completeness, is is indicated that the corresponding 3D sintered body is also essentially free of the binder (B) and the optional shell material (SM).

"Essentially free of the binder (B), the optional shell material (SM) and/or the ceramic material" according to the present invention means that the three-dimensional sintered body comprises less than 5% by volume, preferably less than 2% by volume, particularly preferably less than 0.5% by volume and most preferably less than 0.01% by volume of the binder (B), the optional shell material (SM) and/or the ceramic material.

It is known to the skilled person that during the sintering process the inorganic powder (IP) is sintered together to give a sintered inorganic powder. Furthermore, during the sintering process the inorganic powder (IP) can undergo chemical and/or physical reactions. Consequently, the inorganic powder (IP) comprised in the three-dimensional brown body usually differs from the sintered inorganic powder comprised in the three-dimensional sintered body.

In one embodiment of the present invention, after process step d) and before process step e), the three-dimensional brown body obtained in process step d) is heated for preferably 0.1 to 12h, particularly preferably from 0.3 to 6h, at a temperature of preferably from 250 to 700°C, particularly preferably from 250 to 600°C to remove the residual binder (B) and the optional residual shell material (SM) completely.

The temperature as well as the duration and the atmosphere during process step e) depends on the inorganic powder comprised in the mixture filament as component a). The temperature program of the sintering process, the duration and the atmosphere is in general adapted to the needs of the inorganic powder (IP) comprised in the filament as component a). Suitable conditions for process step e) are known to the skilled person.

In general, process step e) is carried out under the atmosphere of a gas that is inert with regard to the inorganic powder (IP) and the binder (B). Typical inert gases are for example nitrogen and/or argon.

Depending on the inorganic powder (IP) comprised in the filament, it is also possible to carry out process step e) in air, under vacuum or in hydrogen atmosphere.

The temperature in process step e) is in general in the range of from 750 to 1600°C, preferably of from 800 to 1500°C and particularly preferably of from 850 to 1450 °C.

Further subjects of the invention are also the three-dimensional green body, the three-dimensional brown-body and the three-dimensional sintered body prepared by the processes as specified above.

In another embodiment of the present invention, the ceramic feedstock comprises the compounds a), b) and optionally c):
a) 3 to 29% by volume, based on the total volume of the ceramic feedstock, of at least one ceramic material,
b) 51 to 97% by volume, based on the total volume of the ceramic feedstock, of at least one binder (B) comprising component b1)
   b1) at least one polymer (P),
c) 0 to 20% by volume, based on the total volume of the ceramic feedstock, of at least one additive (A).

The above-mentioned embodiments and preferences with respect to the ceramic feedstock according to claim 1 apply analogously.

The following examples further illustrate the invention.

### Feedstock

| | |
|---|---|
| MFI: | Zwick Roell BMF-005 ISO 1133 (190°C. 21.6kg) 100-1000g/10min usually 200-500 g/10min. |
| TGA: | Netzsch STA 449 F3 weight loss N2 at 600°C 2h depending on recipe |

### Feedstock production

Feedstock being used for pellet printing or filament preparation can be prepared by mixing components a), b) and optionally c), followed by kneading or extrusion (single and doublescrew extruders) while temperatures of 170 to 200°C must be reached to ensure proper compounding. Although printers with direct feedstock extruders are capable of working with powder mixes of component a), b) and optionally c) before compounding, this is not recommended.

The printer used is based on a conventional FFF printing system (Ultimaker S5, AIM 3D ExAM255) with two extrusion systems with individual selectable extrusion parameters. The extruder system 1is used to print the metal filled filament and the extruder system 2 is used to print the ceramic-filled filament. The print bed is coated with a thin layer of a water-soluble adhesion promoter like glue (Magigoo ProMetal). The object is printed layer by layer while each layer consists of connected or non-connected lines. The nozzle diameters used are between 0.2 mm and 0.8 mm with varying printing temperature from 200°C to 260°C. The objects are printed with a shrinkage plate. The shrinkage plate is a printed object with multiple layers consisting of potentially varying layer heights and line diameters between the print bed of the printer and the desired object including potential support structures is referred ("raft" in the FFF technology). On top of the shrinkage plate, an optional ceramic layer is printed with the subsequent printing of the desired part with potential support structures from extruder 1. For part areas with an overhang of minimum 60° an automated support structure is generated, and a ceramic layer or multiple ceramic layers are printed as interfacial layers between support structure and the desired part separating the printed support structure from the desired object. The printed objects are released from the print bed by dissolving the glue submerging the print bed in water over night.

### Debinding

Debinding is carried out according to a process at 110°C using HNO3 > 98%. The formaldehyde evolving from the parts during debinding can react with any oxidizing agent. Explosion limit of formaldehyde with oxygen is 4.5% by volume. There is some indication that a slow reaction between formaldehyde and nitric acid exists. Therefore, any unintended high dose of nitric acid must be avoided. Based on a 40 litre debinding furnace (e. g. Nabertherm CDB 40), a nitric acid feed of typically 60 ml/h and a purging gas (nitrogen) throughput of 840 I/h prove to lead to a safe processing. At this gas throughput, the acid feed may not be increased to more than 63 ml/h.

### Sintering

Sintering must be done in clean atmospheres with low oxygen and water contents. Sintering is preferably done in Ar, N₂, and/or H₂ atmosphere or in vacuum. A typical sintering cycle comprise an initial starts at room temperature and heating to 600 °C at a rate of 2 K/min, holding 1 600°C for 1h followed by subsequential heating at a rate of 10 K/min to 1000 to 1400°C, and holding the temperature for 3 h. Subsequently the furnace is cooled to room temperature. The maximum sintering temperature can be also higher than 1400 °C since it depends on the alloy being used for the component. The ceramic component a) is chosen to be not active in that temperature zones.

After the finale sintering process, the metal parts were separated from the shrinkage plate and the support structures by applying small forces, losing the connection between the ceramic layers and the metal components.

## Claims

1. A ceramic feedstock comprising the compounds a), b) and optionally c):
a) 5 to 15% by volume, based on the total volume of the ceramic feedstock, of at least one ceramic material,
b) 80 to 94% by volume, based on the total volume of the ceramic feedstock, of at least one binder (B) comprising component b1)
b1) at least one polymer (P),
c) 1 to 5% by volume, based on the total volume of the ceramic feedstock, of at least one additive (A),
wherein the ceramic material is selected from the group consisting of oxides, carbides, borides, nitrides and silicides and wherein the ceramic feedstock is provided in form of a filament, wherein the filament comprises a core material (CM) coated with a layer of shell material (SM), wherein the core material (CM) comprises the at least one ceramic material, the at least one binder (B) and optionally the at least one additive (A), and wherein the shell material (SM) comprises at least one thermoplastic polymer (TP), optionally at least one ceramic material and optionally at least one additive.

2. The ceramic feedstock according to claim 1, wherein the binder (B)
i) comprises from 50 to 100% by weight of the at least one polymer (P), based on the total weight of the binder, and/or
ii) the at least one polymer (P) is a polyoxymethylene (POM), and/or
iii) further comprises components b2) and/or b3)
b2) at least one polyolefin (PO),
b3) at least one further polymer (FP), in case component b1) is a polyoxymethylene (POM).

3. The ceramic feedstock according to claim 1 or 2, wherein the polymer (P) in component (b1) is a polyoxymethylene (POM) copolymer which is prepared by polymerization of
- from at least 50 mol-% of a formaldehyde source (b1a),
- from 0.01 to 20 mol-% of at least one first comonomer (b1b) of the general formula (II) 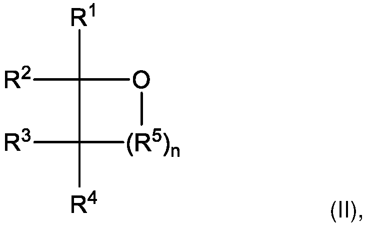 wherein
R' to R⁴ are each independently of one another selected from the group consisting of H, C₁-C₄-alkyl and halogen-substituted C₁-C₄-alkyl;
R⁵ is selected from the group consisting of a chemical bond, a (-CR^{5a}R^{5b}-) group and a (-CR^{5a}R^{5b}O-) group,
wherein
R^{5a} and R^{5b} are each independently of one another selected from the group consisting of H and unsubstituted or at least monosubstituted C₁-C₄-alkyl,
wherein the substituents are selected from the group consisting of F, Cl, Br, OH and C₁-C₄-alkyl;
n is 0, 1, 2 or 3;
and
- from 0 to 20 mol-% of at least one second comonomer (b1c) selected from the group consisting of a compound of formula (III) and a compound of formula (IV) 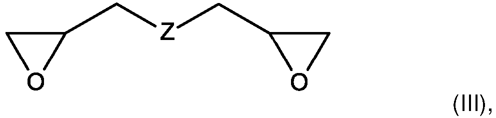 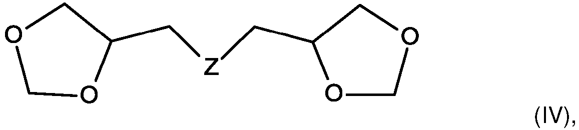 wherein
Z is selected from the group consisting of a chemical bond, an (-O-) group and an (-O-R⁶-O-) group,
wherein
R⁶ is selected from the group consisting of unsubstituted C₁-C₈-alkylene and C₃-C₈-cycloalkylene.

4. The ceramic feedstock according to claim 2, wherein
i) the further polymer (FP) is at least one further polymer (FP) selected from the group consisting of a polyether, a polyurethane, a polyepoxide, a polyamide, a vinyl aromatic polymer, a poly(vinyl ester), a poly(vinyl ether), a poly(alkyl (meth)acrylate) and copolymers thereof, and/or
ii) the ceramic material is selected from the group consisting of MgO, CaO, SiO₂, Na₂O, Al₂O₃, calcinated alumina, ZrO₂, Y₂O₃, SiC, Si₃N₄, TiB, BN, TiN, TiO₂, Ti₂O₃ and AIN, preferably from the group consisting of Al₂O₃, calcinated alumina, ZrO₂ and Y₂O₃, and/or
iii) the particle size of the ceramic material is from 0.1 to 125 µm, preferably from 0.5 to 100 µm, more preferably from 0.1 to 90 µm (measured by Alpine Air Sieve determined as D90 in % by weight), and/or
iv) the polyolefin (PO) is selected from the group consisting of polymethylpentene, poly-1-butene, polyisobutylene, polyethylene and polypropylene, preferably the polyolefin (PO) is polyethylene or polypropylene, most preferably the polyolefin (PO) is polyethylene, and/or
v) the additive (A) is at least one dispersing agent, more preferably at least one polyether, most preferably polytetrahydrofuran.

5. The ceramic feedstock according to any of claims 1 to 4, wherein the ceramic feedstock comprises the components a), b) and optionally c) in an amount of, each based on the total volume of the ceramic feedstock,
a) 7 to 10% by volume of at least one ceramic material,
b) 86 to 91% by volume of at least one binder (B),
c) 2 to 4% by volume of at least one additive (A).

6. The ceramic feedstock according to any of claims 1 to 5, wherein the component b) comprises component b1) and optionally the components b2) and/or b3) in an amount of, each based on the total amount of component b),
b1) 80 to 100% by weight, preferably 85 to 100% by weight, most preferably 85 to 95% by weight of at least one polymer (P),
b2) 0 to 20% by weight, preferably 0 to 15% by weight, most preferably 5 to 15% by weight of at least one polyolefin (PO),
b3) 0 to 10% by weight, preferably 0 to 5% by weight, most preferable 0 to 3% by weight of at last one further polymer (FP),
preferably component b1) is a polyoxymethylene (POM).

7. The ceramic feedstock according to claim 1, wherein the ceramic feedstock is provided in form of a filament and
i) the diameter of the filament is 1.5 to 3.5 mm, preferably 2.0 to 3.1 mm, more preferably 2.6 to 3.0 mm, and/or
ii) the diameter of the core material is 1.5 to 3.0 mm, preferably 1.9 to 2.7 mm, more preferably 2.2 to 2.7 mm, and /or
iii) the thickness of the layer of shell material (SM) is 0.03 to 0.3 mm, preferably 0.1 to 0.25 mm, and/or
iv) the at least one thermoplastic polymer (TP) of the shell material (SM) is selected from the group of polyoxymethylene (POM), polyolefins (PE) such as polypropylene or polyethylene, polyurethanes (PU), polyamides (PA), polyethers (PETH), polycarbonates (PC), and/or polyesters (PES) such as polylactic acid and blends thereof.

8. The use of at least one ceramic feedstock according to any of claims 1 to 7 in a three-dimensional (3D) printing process, in particular within a fused filament fabrication (FFF) process and/or by employing the at least one ceramic feedstock in form of a filament.

9. A process for printing a three-dimensional (3D) object by employing at least one ceramic feedstock according to any of claims 1 to 7, preferably a fused filament fabrication (FFF) process by employing the at least one ceramic feedstock in form of a filament.

10. The process according to claim 9, wherein the printed 3D object is a three-dimensional (3D) green body, preferably the 3D green body is obtained by a fused filament fabrication process, comprising at least the steps a), b) and c)
a) providing at least one filament based on at least one ceramic feedstock according to any of claims 1 to 7 on a spool to a nozzle,
b) heating the filament to a temperature (T_{M}),
c) depositing of the heated filament obtained in step b) in a build chamber using a layer based additive technique in order to form the three dimensional green-body.

11. The process according to claim 10, wherein at least one further filament (F2) is employed, the further filament (F2) comprises at least 30% of volume, based on the total volume of the further filament (F2), of at least one inorganic powder (IP) selected from a metal or a metal alloy in order to obtain a 3D green body comprising
i) at least one first fragment (1F) obtained by employing at least one filament based on at least one ceramic feedstock according to any of claims 1 to 8 and
ii) at least one second fragment (2F) obtained by employing said at least one further filament (F2)

12. The process according to claim 10 or 11, wherein the printed 3D object, preferably the 3D green body, more preferably the at least one first fragment (1F) of the 3D green body, is a support structure and/or a separation layer.

13. The process according to any of claims 10 to 12, wherein step c) is followed by a step d) in which at least a part of the binder (B) is removed from the three-dimensional (3D) green body in order to form a three-dimensional (3D) brown body,
preferably in step d)
i) the binder (B) is removed by catalytic debinding, preferably by acidic treatment and/or
ii) the binder (B) is removed at a temperature below the melting point of the binder (B).

14. The process according to claim 13, wherein step d) is followed by a step e), in which the three-dimensional (3D) brown body is sintered to form a three-dimensional (3D) sintered body.

15. A three-dimensional (3D) green-body, prepared by the process according to any of claims 10 to 12.

## Patentansprüche

1. Keramisches Ausgangsmaterial umfassend die Verbindungen a), b) und gegebenenfalls c):
a) 5 bis 15 Vol.-%, bezogen auf das Gesamtvolumen des keramischen Ausgangsmaterials, an wenigstens einem Keramikmaterial,
b) 80 bis 94 Vol.-%, bezogen auf das Gesamtvolumen des keramischen Ausgangsmaterials, an wenigstens einem Bindemittel (B), das Komponente b1) umfasst,
b1) wenigstens ein Polymer (P),
c) 1 bis 5 Vol.-%, bezogen auf das Gesamtvolumen des keramischen Ausgangsmaterials, an wenigstens einem Zusatzstoff (A),
wobei das Keramikmaterial ausgewählt ist aus der Gruppe bestehend aus Oxiden, Carbiden, Boriden, Nitriden und Siliciden und wobei das Keramikausgangsmaterial in der Form eines Filaments bereitgestellt ist, wobei das Filament ein Kernmaterial (CM) umfasst, das mit einer Schicht aus Mantelmaterial (SM) beschichtet ist, wobei das Kernmaterial (CM) das wenigstens eine Keramikmaterial, das wenigstens eine Bindemittel (B) und gegebenenfalls den wenigstens einen Zusatzstoff (A) umfasst, und wobei das Mantelmaterial (SM) wenigstens ein thermoplastisches Polymer (TP), gegebenenfalls wenigstens ein Keramikmaterial und gegebenenfalls wenigstens einen Zusatzstoff umfasst.

2. Keramisches Ausgangsmaterial nach Anspruch 1, wobei das Bindemittel (B)
i) von 50 bis 100 Gew.-% an dem wenigstens einen Polymer (P), bezogen auf das Gesamtgewicht des Bindemittels, umfasst und/oder
ii) das wenigstens eine Polymer (P) ein Polyoxymethylen (POM) ist und/oder
iii) ferner Komponenten b2) und/oder b3) umfasst,
b2) wenigstens ein Polyolefin (PO),
b3) wenigstens ein weiteres Polymer (FP), falls Komponente b1) ein Polyoxymethylen (POM) ist.

3. Keramisches Ausgangsmaterial nach Anspruch 1 oder 2, wobei das Polymer (P) in Komponente (b1) ein Polyoxymethylen(POM)-Copolymer ist, das hergestellt ist durch Polymerisation von
- wenigstens 50 Mol-% an einer Formaldehydquelle (b1a),
- 0,01 bis 20 Mol-% an wenigstens einem ersten Comonomer (b1b) der allgemeinen Formel (II) 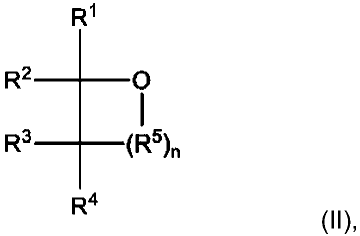 wobei
R¹ und R⁴ jeweils unabhängig voneinander ausgewählt sind aus der Gruppe bestehend aus H, C₁-C₄-Alkyl und halogensubstituiertem C₁-C₄-Alkyl;
R⁵ ausgewählt ist aus der Gruppe bestehend aus einer chemischen Bindung, einer (-CR^{5a}R^{5b}-)-Gruppe und einer (-CR^{5a}R^{5b}O-)-Gruppe,
wobei
R^{5a} und R^{5b} jeweils unabhängig voneinander ausgewählt sind aus der Gruppe bestehend aus H und unsubstituiertem oder wenigstens einfach substituiertem C₁-C₄-Alkyl,
wobei die Substituenten ausgewählt sind aus der Gruppe bestehend aus F, Cl, Br, OH und C₁-C₄-Alkyl;
n 0, 1, 2 oder 3 ist;
und
- von 0 bis 20 Mol-% an wenigstens einem zweiten Comonomer (b1c) ausgewählt aus der Gruppe bestehend aus einer Verbindung der Formel (III) und einer Verbindung der Formel (IV) 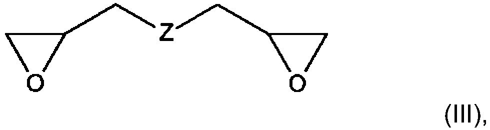 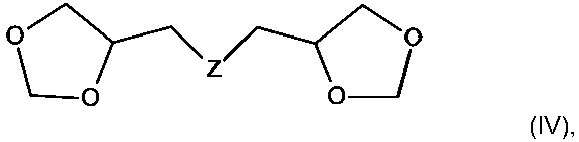 wobei
Z ausgewählt ist aus der Gruppe bestehend aus einer chemischen Bindung, einer (-O-)-Gruppe und einer (-O-R⁶-O-)-Gruppe,
wobei
R⁶ ausgewählt ist aus der Gruppe bestehend aus unsubstituiertem C₁-C₈-Alkylen und C₃-C₈-Cycloalkylen.

4. Keramisches Ausgangsmaterial nach Anspruch 2, wobei
i) das weitere Polymer (FP) wenigstens ein weiteres Polymer (FP) ausgewählt aus der Gruppe bestehend aus einem Polyether, einem Polyurethan, einem Polyepoxid, einem Polyamid, einem vinylaromatischen Polymer, einem Poly(vinylester), einem Poly(vinylether), einem Poly(alkyl(Meth)acrylat) und deren Copolymeren ist, und/oder
ii) das Keramikmaterial ausgewählt ist aus der Gruppe bestehend aus MgO, CaO, SiO₂, Na₂O, Al₂O₃, kalziniertem Aluminiumoxid, ZrO₂, Y₂O₃, SiC, Si₃N₄, TiB, BN, TiN, TiO₂, Ti₂O₃ und AIN, vorzugsweise aus der Gruppe bestehend aus Al₂O₃, kalziniertem Aluminiumoxid, ZrO₂ und Y₂O₃, und/oder
iii) die Partikelgröße des Keramikmaterials von 0,1 bis 125 µm, vorzugsweise von 0,5 bis 100 µm, bevorzugter von 0,1 bis 90 µm beträgt (gemessen mit Alpine Air Sieve, bestimmt als D90 in Gew.-%) und/oder
iv) das Polyolefin (PO) ausgewählt ist aus der Gruppe bestehend aus Polymethylpenten, Poly-1-buten, Polyisobutylen, Polyethylen und Polypropylen, vorzugsweise das Polyolefin (PO) Polyethylen oder Polypropylen ist, höchst bevorzugt das Polyolefin (PO) Polyethylen ist, und/oder
v) der Zusatzstoff (A) wenigstens ein Dispergiermittel ist, bevorzugter wenigstens ein Polyether, höchst bevorzugt Polytetrahydrofuran.

5. Keramisches Ausgangsmaterial nach einem der Ansprüche 1 bis 4, wobei das keramische Ausgangsmaterial die Komponenten a), b) und gegebenenfalls c) in einer Menge, jeweils bezogen auf das Gesamtvolumen des keramischen Ausgangsmaterials, umfasst von
a) 7 bis 10 Vol.-% an wenigstens einem Keramikmaterial,
b) 86 bis 91 Vol.-% an wenigstens einem Bindemittel (B),
c) 2 bis 4 Vol.-% an wenigstens einem Zusatzstoff (A).

6. Keramisches Ausgangsmaterial nach einem der Ansprüche 1 bis 5, wobei die Komponente b) Komponente b1) und gegebenenfalls die Komponenten b2) und/oder b3) in einer Menge, jeweils bezogen auf die Gesamtmenge der Komponente b), umfasst von
b1) 80 bis 100 Gew.-%, vorzugsweise 85 bis 100 Gew.-%, höchst bevorzugt 85 bis 95 Gew.-%, an wenigstens einem Polymer (P),
b2) 0 bis 20 Gew.-%, vorzugsweise 0 bis 15 Gew.-%, höchst bevorzugt 5 bis 15 Gew.-%, an wenigstens einem Polyolefin (PO),
b3) 0 bis 10 Gew.-%, vorzugsweise 0 bis 5 Gew.-%, höchst bevorzugt 0 bis 3 Gew.-%, an wenigstens einem weiteren Polymer (FP),
wobei Komponente b1) vorzugsweise ein Polyoxymethylen (POM) ist.

7. Keramisches Ausgangsmaterial nach Anspruch 1, wobei das keramische Ausgangsmaterial in der Form eines Filaments bereitgestellt ist und
i) der Durchmesser des Filaments 1,5 bis 3,5 mm, vorzugsweise 2,0 bis 3,1 mm, bevorzugter 2,6 bis 3,0 mm, beträgt und/oder
ii) der Durchmesser des Kernmaterials 1,5 bis 3,0 mm, vorzugsweise 1,9 bis 2,7 mm, bevorzugter 2,2 bis 2,7 mm, beträgt und/oder
lii) die Dicke der Schicht von Mantelmaterial (SM) 0,03 bis 0,3 mm, vorzugsweise 0,1 bis 0,25 mm, beträgt, und/oder
iv) das wenigstens eine thermoplastische Polymer (TP) des Mantelmaterials (SM) ausgewählt ist aus der Gruppe von Polyoxymethylen (POM), Polyolefinen (PE), wie z.B. Polypropylen oder Polyethylen, Polyurethanen (PU), Polyamiden (PA), Polyethern (PETH), Polycarbonaten (PC) und/oder Polyestern (PES), wie z.B. Polymilchsäure, und Gemischen davon.

8. Verwendung wenigstens eines keramischen Ausgangsmaterials nach einem der Ansprüche 1 bis 7 bei einem dreidimensionalen (3D) Druckverfahren, insbesondere bei einem Fused-Filament-Fabrication(FFF)-Verfahren, und/oder unter Verwendung des wenigstens einen keramischen Ausgangsmaterials in Form eines Filaments.

9. Verfahren zum Bedrucken eines dreidimensionalen (3D) Gegenstands unter Verwendung wenigstens eines keramischen Ausgangsmaterials nach einem der Ansprüche 1 bis 7, vorzugsweise ein Fused-Filament-Fabrication(FFF)-Verfahren unter Verwendung des wenigstens einen keramischen Ausgangsmaterials in Form eines Filaments.

10. Verfahren nach Anspruch 9, wobei der gedruckte 3D-Gegenstand ein dreidimensionaler (3D) Grünkörper ist, wobei der 3D-Grünkörper vorzugsweise durch ein Fused-Filament-Fabrication-Verfahren erhalten wird, das wenigstens die Schritte a), b) und c) umfasst,
a) Zuführen wenigstens eines Filaments auf der Grundlage wenigstens eines keramischen Ausgangsmaterials nach einem der Ansprüche 1 bis 7 auf einer Spule zu einer Düse,
b) Erhitzen des Filaments auf eine Temperatur (T_{M}),
c) Abscheiden des bei Schritt b) erhaltenen erhitzten Filaments in einer Aufbaukammer unter Verwendung eines additiven Verfahrens auf Schichtbasis, um den dreidimensionalen Grünkörper zu bilden.

11. Verfahren nach Anspruch 10, wobei wenigstens ein weiteres Filament (F2) eingesetzt wird, das weitere Filament (F2) wenigstens 30 Vol.-%, bezogen auf das Gesamtvolumen des weiteren Filaments (F2), an wenigstens einem anorganischen Pulver (IP) ausgewählt aus einem Metall und einer Metalllegierung umfasst, um einen 3D-Grünkörper zu erhalten, umfassend
i) wenigstens ein erstes Fragment (1F), erhalten unter Verwendung wenigstens eines Filaments auf der Grundlage wenigstens eines keramischen Ausgangsmaterials nach einem der Ansprüche 1 bis 8, und
ii) wenigstens ein zweites Fragment (2F), erhalten unter Verwendung des wenigstens einen weiteren Filaments (F2).

12. Verfahren nach Anspruch 10 oder 11, wobei der gedruckte 3D-Gegenstand, vorzugsweise der 3D-Grünkörper, bevorzugter das wenigstens eine erste Fragment (1F) des 3D-Grünkörpers, eine Trägerstruktur und/oder eine Trennschicht ist.

13. Verfahren nach einem der Ansprüche 10 bis 12, wobei sich an Schritt c) ein Schritt d) anschließt, bei dem wenigstens ein Teil des Bindemittels (B) aus dem dreidimensionalen (3D) Grünkörper entfernt wird, um einen dreidimensionalen (3D) Braunkörper zu bilden,
wobei vorzugsweise bei Schritt d)
i) das Bindemittel (B) durch katalytische Entbindung, vorzugsweise durch saure Behandlung, entfernt wird und/oder
ii) das Bindemittel (B) bei einer Temperatur unterhalb des Schmelzpunktes des Bindemittels (B) entfernt wird.

14. Verfahren nach Anspruch 13, wobei sich an Schritt d) ein Schritt e) anschließt, bei dem der dreidimensionale (3D) Braunkörper gesintert wird, um einen dreidimensionalen (3D) gesinterten Körper zu bilden.

15. Dreidimensionaler (3D) Grünkörper, hergestellt durch das Verfahren nach einem der Ansprüche 10 bis 12.

## Revendications

1. Matière première céramique comprenant les composés a), b) et facultativement c) :
a) 5 à 15 % en volume, par rapport au volume total de la matière première céramique, d'au moins un matériau céramique, et
b) 80 à 94 % en volume, par rapport au volume total de la matière première céramique, d'au moins un liant (B), comprenant le composant b1)
b1) au moins un polymère (P),
c) 1 à 5 % en volume, par rapport au volume total de la matière première céramique (CM), d'au moins un additif (A),
le matériau céramique étant choisi dans le groupe constitué par des oxydes, des carbures, des borures, des nitrures et des siliciures et la matière première céramique étant fournie sous la forme d'un filament, le filament comprenant un matériau d'âme (CM) revêtu d'une couche de matériau d'enveloppe (SM), le matériau d'âme (CM) comprenant le ou les matériaux céramiques, le liant (B) et facultativement le ou les additifs (A), et le matériau d'enveloppe (SM) comprenant au moins un polymère thermoplastique (TP), facultativement au moins un matériau céramique et facultativement au moins un additif.

2. Matière première céramique selon la revendication 1, dans laquelle le liant (B)
i) comprend de 50 à 100 % en poids du ou des polymères (P) par rapport au poids total du liant, et/ou
ii) le ou les polymères (P) sont un polyoxyméthylène (POM), et/ou
iii) comprend en outre les composants b2) et/ou b3)
b2) au moins une polyoléfine (PO),
b3) au moins un autre polymère (PF), dans le cas où le composant b1) est un polyoxyméthylène (POM).

3. Matière première céramique selon la revendication 1 ou 2, dans laquelle le polymère (P) dans le composant (b1) est un copolymère de polyoxyméthylène (POM) qui est préparé par polymérisation de
- au moins 50 % en moles d'une source de formaldéhyde (b1a),
- de 0,01 à 20 % en moles d'au moins un premier comonomère (b1b) de formule générale (II) 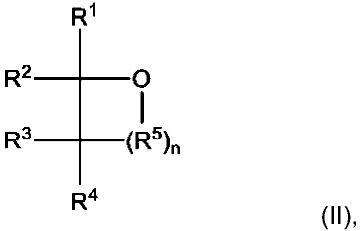 dans lequel
R¹ à R⁴, indépendamment les uns des autres, sont choisis dans le groupe constitué par H, un groupe alkyle en C₁-C₄ et alkyle en C₁-C₄ substitué par halogène ;
R⁵ est choisi dans le groupe constitué par une liaison chimique, un groupe (-CR^{5a}R^{5b}-) et un groupe (-CR5aR^{5b}O-),
dans lequel
R^{5a} et R^{5b}, indépendamment l'un de l'autre, sont choisis dans le groupe constitué par H et un groupe alkyle en C₁-C₄ non substitué ou au moins monosubstitué,
les substituants étant choisis dans le groupe constitué par F, CI, Br, OH et un groupe alkyle en C₁-C₄ ;
n est 0, 1, 2 ou 3 ;
et
- de 0 à 20 % en moles d'au moins un deuxième comonomère (b1c) choisi dans le groupe constitué par un composé de formule (III) et un composé de formule (IV) 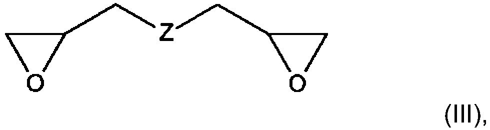 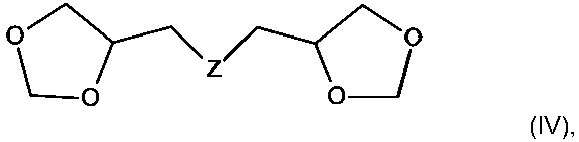 dans lequel
Z est choisi dans le groupe constitué par une liaison chimique, un groupe (-O-) et un groupe (-O-R⁶-O-),
dans lequel
R⁶ est choisi dans le groupe constitué par alkylène en C₁-C₈ et cycloalkylène en C₃-C₈ non substitués ;

4. Matière première céramique selon la revendication 2, dans laquelle
i) le polymère supplémentaire (PF) est au moins un autre polymère (PF) choisi dans le groupe constitué par un polyéther, un polyuréthane, un polyépoxyde, un polyamide, un polymère vinylaromatique, un poly(ester vinylique), un poly(éther vinylique), un poly((méth)acrylate d'alkyle) et des copolymères de ceux-ci, et/ou
ii) le matériau céramique est choisi dans le groupe constitué par MgO, CaO, SiO₂, Na₂O, Al₂O₃, l'alumine calcinée, ZrO₂, Y₂O₃, SiC, Si₃N₄, TiB, BN, TiN, TiO₂, Ti₂O₃ et AIN, de préférence dans le groupe constitué par Al₂O₃, l'alumine calcinée, ZrO₂ and Y₂O₃, et/ou
iii) la taille de particule du matériau céramique est de 0,1 à 125 µm, de préférence de 0,5 à 100 µm, plus préférentiellement de 0,1 à 90 µm (mesurée par Alpine Air Sieve, déterminée en tant que D90 en % en poids), et/ou
iv) la polyoléfine (PO) est choisie dans le groupe constitué par le polyméthylpentène, le polybutène-1, le polyisobutylène, le polyéthylène et le polypropylène, de préférence la polyoléfine (PO) est le polyéthylène ou le polypropylène, tout particulièrement de préférence, la polyoléfine (PO) est le polyéthylène, et/ou
v) l'additif (A) est au moins un agent dispersant, plus préférentiellement au moins un polyéther, tout particulièrement de préférence le polytétrahydrofurane.

5. Matière première céramique selon l'une quelconque des revendications 1 à 4, la matière première céramique comprenant les composants a), b) et facultativement c) en une quantité, chacune par rapport au volume total de la matière première céramique, de
a) 7 à 10 % en volume d'au moins un matériau céramique,
b) 86 à 91 % en volume d'au moins un liant (B),
c) 2 à 4 % en volume d'au moins un additif (A) ;

6. Matière première céramique selon l'une quelconque des revendications 1 à 5, dans laquelle le composant b) comprend le composant b1) et facultativement les composants b2) et/ou b3) en une quantité, chacune par rapport à la quantité totale du composant b), de
b1) 80 à 100 % en poids, de préférence 85 à 100 % en poids, tout particulièrement de préférence 85 à 95 % en poids d'au moins un polymère (P),
b2) 0 à 20 % en poids, de préférence 0 à 15 % en poids, tout particulièrement de préférence 5 à 15 % en poids d'au moins une polyoléfine (PO),
b3) 0 à 10 % en poids, de préférence 0 à 5 % en poids, tout particulièrement de préférence 0 à 3 % en poids d'au moins un polymère supplémentaire (FP),
de préférence, le composant b1) est un polyoxyméthylène (POM).

7. Matière première céramique selon la revendication 1, la matière première céramique étant fournie sous la forme d'un filament et
i) le diamètre du filament étant de 1,5 à 3,5 mm, préférablement de 2,0 à 3,1 mm, plus préférentiellement de 2,6 à 3,0 mm, et/ou
ii) le diamètre du matériau d'âme étant de 1,5 à 3,0 mm, de préférence de 1,9 à 2,7 mm, plus préférentiellement de 2,2 à 2,7 mm, et/ou
ii) l'épaisseur de la couche du matériau d'enveloppe (SM) étant de 0,03 à 0,3 mm, de préférence de 0,1 à 0,25 mm, et/ou
iv) le ou les polymères thermoplastiques (TP) du matériau d'enveloppe (SM) étant choisis dans le groupe des polyoxyméthylène (POM), polyoléfines (PE) telles que le polypropylène ou le polyéthylène, polyuréthanes (PU), polyamides (PA), polyéthers (PETH), polycarbonates (PC) et/ou polyesters (PES) tels que l'acide polylactique et des mélanges de ceux-ci.

8. Utilisation d'au moins une matière première céramique selon l'une quelconque des revendications 1 à 7 dans un procédé d'impression tridimensionnelle (3D), en particulier dans un procédé de fabrication par dépôt de filament fondu (FDM) et/ou en utilisant la ou les matières premières céramiques sous la forme d'un filament.

9. Procédé d'impression d'un objet tridimensionnel (3D) utilisant au moins une matière première céramique selon l'une quelconque des revendications 1 à 7, de préférence un procédé de fabrication par dépôt de filament fondu (FDM) en utilisant la ou les matières premières céramiques sous la forme d'un filament.

10. Procédé selon la revendication 9, l'objet 3D imprimé étant un corps cru tridimensionnel (3D), de préférence le corps cru 3D étant obtenu par un procédé de fabrication par dépôt de filament fondu, comprenant au moins les étapes a), b) et c)
a) fourniture d'au moins un filament à base d'au moins une matière première céramique selon l'une quelconque des revendications 1 à 7 depuis une bobine vers une buse,
b) chauffage du filament à une température (T_{M}),
c) dépôt du filament chauffé obtenu à l'étape b) dans une chambre de construction au moyen d'une technique additive à base de couches afin de former l'objet tridimensionnel.

11. Procédé selon la revendication 10, dans lequel au moins un filament supplémentaire (F2) est utilisé, le filament supplémentaire (F2) comprenant au moins 30 % en volume, par rapport au volume total du filament supplémentaire (F2), d'au moins une poudre inorganique (IP) choisie parmi un métal ou un alliage métallique afin d'obtenir un corps cru 3D comprenant
i) au moins un premier fragment (1F) obtenu en utilisant au moins un filament à base d'au moins une matière première céramique selon l'une quelconque des revendications 1 à 8 et
ii) au moins un deuxième fragment (2F) obtenu en utilisant ledit ou lesdits filaments supplémentaires (F2).

12. Procédé selon la revendication 10 ou 11, dans lequel l'objet 3D imprimé, de préférence le corps cru 3D, plus préférentiellement le ou les premiers fragments (1F) du corps cru 3D, est une structure de support et/ou une couche de séparation.

13. Procédé selon l'une quelconque des revendications 10 à 12, dans lequel l'étape c) est suivie d'une étape d) dans laquelle au moins une partie du liant (B) est enlevée du corps cru tridimensionnel (3D) pour former un corps brun tridimensionnel (3D),
de préférence à l'étape d)
i) le liant (B) est éliminé par déliantage catalytique, de préférence par traitement acide et/ou
ii) le liant (B) est éliminé à une température inférieure au point de fusion du liant (B).

14. Procédé selon la revendication 13, dans lequel l'étape d) est suivie d'une étape e), dans laquelle le corps brun tridimensionnel (3D) est fritté pour former un corps fritté tridimensionnel (3D).

15. Corps cru tridimensionnel (3D), préparé par le procédé selon l'une quelconque des revendications 10 à 12.
